# EUROPEAN PATENT APPLICATION

(11) **EP 4 357 896 A1**
(43) Date of publication of application: **24.04.2024**
(21) Application number: 23757504.8
(22) Date of filing: 28.08.2023
(51) Int. Cl.: G06F 3/0484, G06F 3/04817, G06F 3/041, G06F 3/0481

(54) **ELECTRONIC DEVICE FOR CONTROLLING ATTRIBUTE INFORMATION OF APPLICATION AND METHOD FOR CONTROLLING SAME**

(30) Priority: 29.08.2022 KR 20220108232; 04.10.2022 KR 20220126264
(71) Applicant: Samsung Electronics Co., Ltd., Suwon-si, Gyeonggi-do 16677 (KR)
(72) Inventor: CHOI, Yoonjung, Suwon-si, Gyeonggi-do 16677 (KR); KIM, Sojin, Suwon-si, Gyeonggi-do 16677 (KR); LEE, Hyeonju, Suwon-si, Gyeonggi-do 16677 (KR)
(74) Representative: Nederlandsch Octrooibureau
(86) International application number: PCT/KR2023/012692
(87) International publication number: WO 2024/049126

(57) **Abstract**

An electronic device is disclosed. The electronic device of the disclosure includes a touch screen and at least one processor. The at least one processor is configured to display an execution screen of a first application; identify attribute information of the execution screen of the first application, the attribute information including at least one of the layout information of the execution screen of the first application or background color information of the execution screen of the first application; and in response to selection of a UI for executing a second application, the UI being included in the execution screen of the first application, display an execution screen of the second application to which, at least part of the identified attribute information of the execution screen of the first application is applied.

## Description

### [Technical Field]

Embodiments of the disclosure relate to an electronic device for changing an application being executed while maintaining attribute information and a method for controlling the same.

### [Background Art]

An electronic device, for example, a portable electronic device such as a smartphone, has been providing a gradually increasing number of various services and additional functions. To increase the utilization of such electronic devices and satisfy the needs of various users, communication service providers or electronic device manufacturers are competitively developing electronic devices to provide various functions and differentiate them from other companies. Accordingly, various functions provided through the electronic device are also increasingly advanced.

In addition, electronic devices provide various graphic user interfaces (GUIs) for interaction with users through a display.

### [Disclosure of Invention]

According to an embodiment, an electronic device may comprise a touch screen, and at least one processor.

According to an embodiment, the at least one processor may display an execution screen of a first application.

According to an embodiment, the at least one processor may obtain attribute information of the execution screen of the first application including at least one of layout information of the execution screen of the first application or color information based on a light/dark mode.

According to an embodiment, in response to selection of a user interface (UI) for executing a second application included in the execution screen of the first application, the at least one processor may display an execution screen of the second application, in place of the execution screen of the first application, based on at least one of the attribute information of the execution screen of the first application.

According to an embodiment, the first application may be a camera application.

According to an embodiment, the layout information may include arrangement information for at least one of a first area displaying a preview, a second area displaying at least one stored image, or a third area displaying detailed information corresponding to the preview.

According to an embodiment, the at least one processor may display the execution screen of the second application that includes the same attribute information as that of the execution screen of the first application.

According to an embodiment, the second application may be an application for identifying or editing images obtained based on the camera application.

According to an embodiment, the at least one processor may obtain an image captured of the preview displayed in the first area and information associated with the image, based on reception of an input for capturing the preview displayed in the first area while the execution screen of the first application is displayed.

According to an embodiment, the at least one processor may obtain the execution screen of the second application by using the image and the information associated with the image, in response to the selection of the UI for executing the second application included in the execution screen of the first application.

According to an embodiment, the at least one processor may obtain position and/or size information of at least one of the first to third areas included in the execution screen of the first application.

According to an embodiment, the at least one processor may obtain the execution screen of the second application by using the position and/or size information of at least one of the first to third areas, in response to the selection of the UI for executing the second application included in the execution screen of the first application.

According to an embodiment, the electronic device may be a foldable electronic device comprising a hinge.

According to an embodiment, the layout information may include arrangement information for at least one of the first to third areas based on the area where the hinge is disposed.

According to an embodiment, the at least one processor may display a plurality of user interfaces (UIs) for changing the attribute information of the execution screen of the first application in a partial area of the execution screen of the first application.

According to an embodiment, the at least one processor may change the execution screen of the first application based on attribute information corresponding to a selected UI among the plurality of UIs.

According to an embodiment, the at least one processor may obtain the execution screen of the second application by using the attribute information of the changed execution screen of the first application, in response to the selection of the UI for executing the second application included in the changed execution screen of the first application.

According to an embodiment, the at least one processor may change the execution screen of the first application based on attribute information corresponding to a touch input received through the touch screen.

According to an embodiment, the at least one processor may obtain the execution screen of the second application by using the attribute information of the changed execution screen of the first application, in response to the selection of the UI for executing the second application included in the changed execution screen of the first application.

According to an embodiment, the electronic device may further comprise at least one sensor.

According to an embodiment, the at least one processor may obtain illuminance of a surrounding environment through the at least one sensor.

According to an embodiment, in response to the selection of the UI for executing a second application included in the execution screen of the first application, the at least one processor may obtain the execution screen of the second application having a background color obtained based on the illuminance of the surrounding environment.

According to an embodiment, in response to receiving a user input for returning to the first application while the execution screen of the second application is displayed, the at least one processor may display the execution screen of the first application, in place of the execution screen of the second application, based on the attribute information of the execution screen of the second application.

According to an embodiment, a method for controlling an electronic device may comprise displaying an execution screen of a first application.

According to an embodiment, the method for controlling the electronic device may comprise obtaining attribute information of the execution screen of the first application including at least one of layout information of the execution screen of the first application or color information based on a light/dark mode.

According to an embodiment, the method for controlling the electronic device may comprise, in response to selection of a user interface (UI) for executing a second application included in the execution screen of the first application, displaying an execution screen of the second application, in place of the execution screen of the first application, based on at least one of the attribute information of the execution screen of the first application.

According to an embodiment, the first application may be a camera application.

According to an embodiment, the layout information may include arrangement information for at least one of a first area displaying a preview, a second area displaying at least one stored image, or a third area displaying detailed information corresponding to the preview.

According to an embodiment, displaying the execution screen of the second application may include displaying the execution screen of the second application that includes the same attribute information as that of the execution screen of the first application.

According to an embodiment, the second application may be an application for identifying or editing images obtained based on the camera application.

According to an embodiment, the method of controlling the electronic device may further comprise obtaining an image captured of the preview displayed in the first area and information associated with the image, based on reception of an input for capturing the preview displayed in the first area while the execution screen of the first application is displayed.

According to an embodiment, displaying the execution screen of the second application may include obtaining the execution screen of the second application by using the image and the information associated with the image, in response to the selection of the UI for executing the second application included in the execution screen of the first application.

According to an embodiment, obtaining the attribute information of the execution screen of the first application may include obtaining position and/or size information of at least one of the first to third areas included in the execution screen of the first application.

According to an embodiment, displaying the execution screen of the second application may include obtaining the execution screen of the second application by using the position and/or size information of at least one of the first to third areas, in response to the selection of the UI for executing the second application included in the execution screen of the first application.

According to an embodiment, the electronic device may be a foldable electronic device comprising a hinge.

According to an embodiment, the layout information may include arrangement information for at least one of the first to third areas based on the area where the hinge is disposed.

According to an embodiment, the method for controlling the electronic device may further include displaying a plurality of user interfaces (UIs) for changing attribute information of the execution screen of the first application in a partial area of the execution screen of the first application.

According to an embodiment, the method for controlling the electronic device may further include changing the execution screen of the first application based on attribute information corresponding to a selected UI among the plurality of UIs.

According to an embodiment, displaying the execution screen of the second application may include obtaining the execution screen of the second application by using the attribute information of the changed execution screen of the first application, in response to the selection of the UI for executing the second application included in the changed execution screen of the first application.

According to an embodiment, the method for controlling the electronic device may further include changing the execution screen of the first application based on attribute information corresponding to a touch input received through the touch screen.

According to an embodiment, displaying the execution screen of the second application may include obtaining the execution screen of the second application by using the attribute information of the changed execution screen of the first application, in response to the selection of the UI for executing the second application included in the changed execution screen of the first application.

According to an embodiment, the method for controlling the electronic device may further include obtaining illuminance of a surrounding environment through at least one sensor.

According to an embodiment, displaying the execution screen of the second application may include obtaining the execution screen of the second application having a background color obtained based on the illuminance of the surrounding environment, in response to the selection of the UI for executing the second application included in the execution screen of the first application.

According to an embodiment, the method for controlling the electronic device may further include, in response to receiving a user input for returning to the first application while the execution screen of the second application is displayed, displaying the execution screen of the first application, in place of the execution screen of the second application, based on the attribute information of the execution screen of the second application.

Hereinafter, examples/embodiments will be described in detail with reference to the accompanying drawings. When describing the embodiments with reference to the accompanying drawings, like reference numerals refer to like elements and a repeated description related thereto may be omitted. The person skilled in the art will understand that the features/embodiments described above and/or below may be combined in any way deemed useful. The drawings of the present disclosure show examples/embodiments of the invention, which will be described in detail hereinafter. It is to be understood that one or more of elements / components shown and/or described in one or more of these examples/embodiments and not in others may be used in those others too unless mechanical or other limitations prevent such an implementation. Moreover, describing features of different examples/embodiments in a single passage does not automatically mean that those features are inextricably linked. They may be applied separately from one another.

### [Brief Description of the Drawings]

FIG. 1 is a block diagram of an electronic device in a network environment;
FIG. 2A is a diagram illustrating an unfolded state of a foldable electronic device;
FIG. 2B is a diagram illustrating a folded state of a foldable electronic device;
FIG. 3 is a diagram illustrating an operation of switching an execution screen of an application of an electronic device;
FIG. 4A is a diagram illustrating attribute information of an application execution screen of an electronic device;
FIG. 4B is a diagram illustrating attribute information of an application execution screen of an electronic device;
FIG. 4C is a diagram illustrating attribute information of an application execution screen of an electronic device;
FIG. 5A is a diagram illustrating an operation of changing an application being executed while maintaining attribute information of an electronic device;
FIG. 5B is a diagram illustrating an operation of changing an application being executed while maintaining attribute information of an electronic device;
FIG. 5C is a diagram illustrating an operation of changing an application being executed while maintaining attribute information of an electronic device;
FIG. 5D is a diagram illustrating an operation of changing an application being executed while maintaining attribute information of an electronic device;
FIG. 6 is a diagram illustrating an operation of changing an application being executed while maintaining attribute information of an electronic device;
FIG. 7 is a diagram illustrating an operation of changing an application being executed while maintaining attribute information of an electronic device;
FIG. 8 is a diagram illustrating an operation of changing an application being executed while maintaining attribute information of an electronic device;
FIG. 9A is a diagram illustrating an operation of changing attribute information of an execution screen of an application of an electronic device;
FIG. 9B is a diagram illustrating an application execution screen including attribute information which includes detailed information of a preview image of an electronic device.
FIG. 9C is a diagram illustrating an operation of changing an application being executed while maintaining attribute information of an electronic device.
FIG. 10 is a diagram illustrating an operation of changing layout based on a hinge area of a foldable electronic device;
FIG. 11 is a diagram illustrating an operation of displaying an execution screen of an application switched based on the surrounding environment of an electronic device;
FIG. 12 a diagram illustrating an operation of changing an application being executed while maintaining attribute information of a foldable electronic device; and
FIG. 13 is a diagram illustrating an operation of changing layout based on a hinge area of a foldable electronic device.

### [Mode for the Invention]

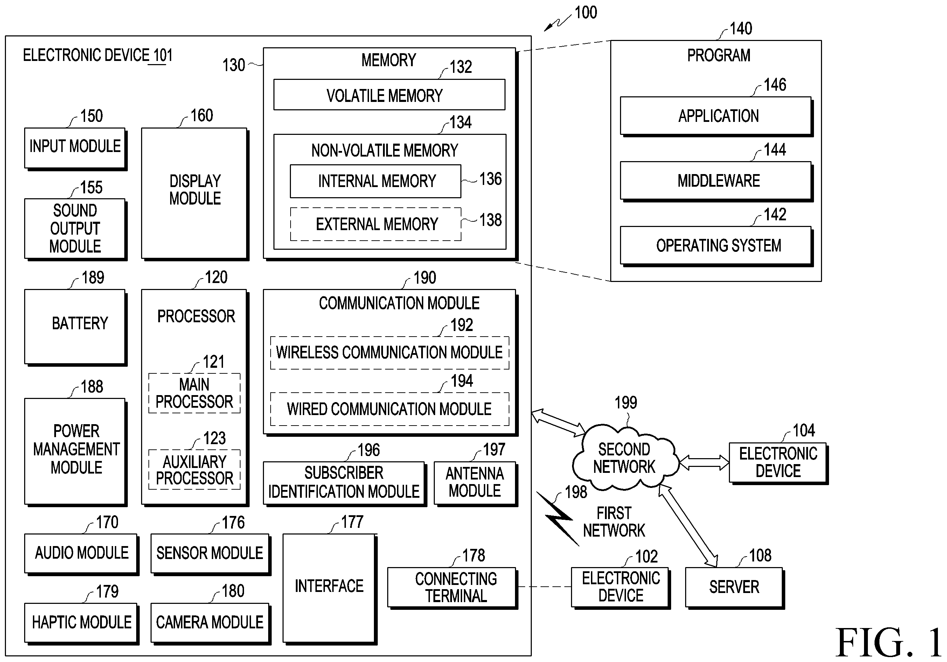

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for deep learning model processing. The deep learning model may be generated via machine learning. Such learning may be performed, e.g., by the electronic device 101 where the deep learning model is performed or via a separate server (e.g., the server 108). Learning algorithms may include, but are not limited to, e.g., supervised learning, unsupervised learning, semi-supervised learning, or reinforcement learning. The deep learning model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The deep learning model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

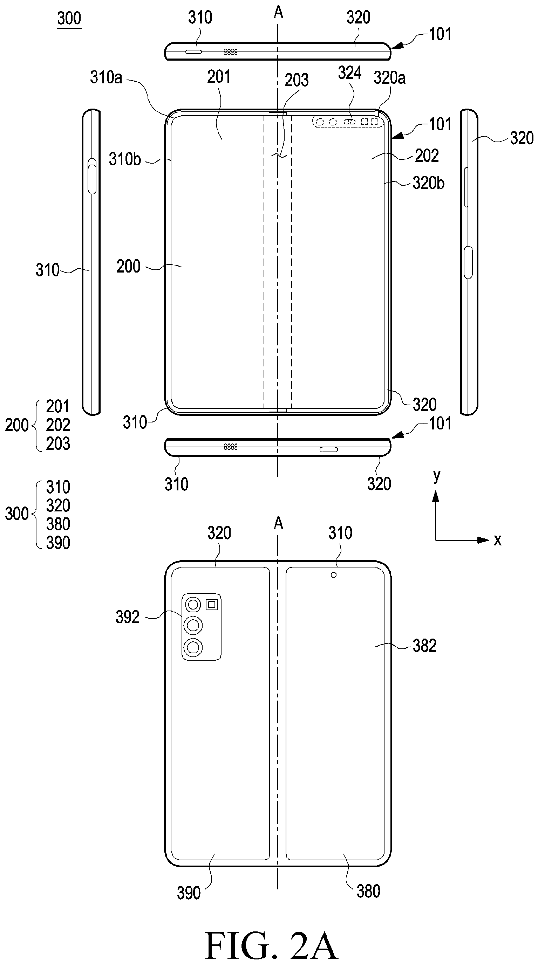

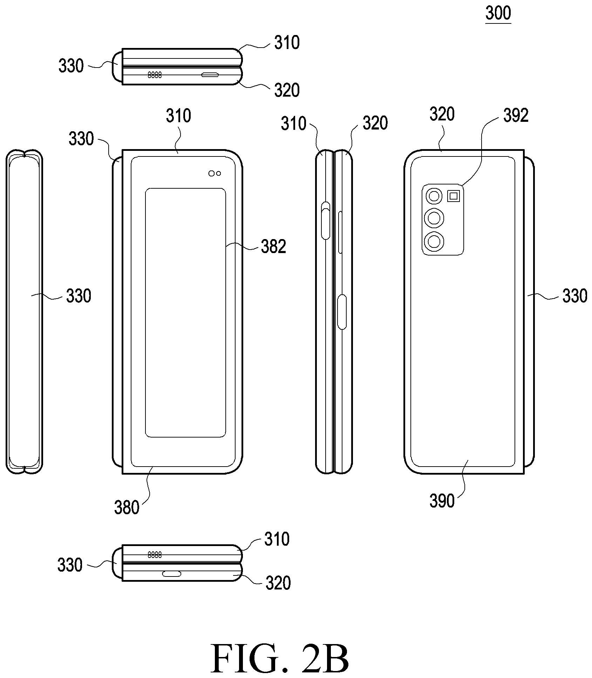

FIG. 2A is a diagram illustrating an unfolded state of a foldable electronic device. FIG. 2B is a diagram illustrating a folded state of a foldable electronic device.

Referring to FIGS. 2A and 2B, according to an embodiment, a foldable electronic device (hereinafter, the electronic device 101) may include a foldable housing 300, a hinge case (e.g., the hinge cover 330 in FIG. 2B) (e.g., a hinge cover) that covers a foldable portion of the foldable housing 300, and a flexible or foldable display 200 (hereinafter, simply referred to as "display" 200) (e.g., the display device 160 in FIG. 1) disposed in a space formed by the foldable housing 300. According to an embodiment, a surface on which the display 200 is disposed is defined as a front surface of the electronic device 101, and a surface opposite to the front surface is defined as a rear surface of the electronic device 101. A surface that surrounds the space between the front and rear surfaces is defined as a side face of the electronic device.

According to an embodiment, the foldable housing 300 may include a first housing structure 310, a second housing structure 320 including a sensor area 324, a first rear cover 380, a second rear cover 390, and a hinge structure. The foldable housing 300 of the electronic device 101 is not limited to the shape and combination as shown in FIGS. 2A and 2B but may be rather implemented in other shapes or via a combination and/or coupling of other components. For example, in another embodiment, the first housing structure 310 and the first rear cover 380 may be integrally formed with each other, and the second housing structure 320 and the second rear cover 390 may be integrally formed with each other.

According to an embodiment, the first housing structure 310 may be connected to a hinge structure and may include a first surface facing in a first direction, e.g. towards the front surface, and a second surface facing in a second direction opposite to the first direction. The second housing structure 320, which can be connected to the hinge structure as well, may include a third surface facing in a third direction being substantially parallel to the first direction and a fourth surface facing in a fourth direction opposite to the third direction, and may rotate around the hinge structure from the first housing structure 310. Accordingly, the electronic device 101 may vary between a folded state (e.g. closed state, bended state, first state) and an unfolded state. In the folded state (e.g. opened state, expanded state, stretched state, unbended state, second state) of the electronic device 101, the first surface may face the third surface, and in the unfolded state, the third direction may be the same as the first direction.

According to an embodiment, the first housing structure 310 and the second housing structure 320 may be disposed on both sides of the folding axis (A) and can, preferably, have an overall symmetrical shape with respect to the folding axis (A). As described below, the first housing structure 310 and the second housing structure 320 may have different angles or distances therebetween depending on whether the electronic device 101 is in an unfolded state, a folded state, or a partially unfolded intermediate state. According to an embodiment, unlike the first housing structure 310, the second housing structure 320 may further include the sensor area 324 in which various sensors are arranged, but may have a mutually symmetrical shape in other areas.

According to an embodiment, as shown in FIG. 2, the first housing structure 310 and the second housing structure 320 together may form a recess that accommodates the display 200. According to an embodiment, due to the sensor area 324, the recess may have two or more different widths in the direction perpendicular to the folding axis (A).

According to an embodiment, the recess may have a first width (w1) between a first portion 310a of the first housing structure 310 parallel to the folding axis (A) and a first portion 320a formed at the edge of the sensor area 324 of the second housing structure 320. The recess may have a second width (w2) formed by a second portion 320b of the second housing structure 320, which is parallel to the folding axis (A) and does not correspond to a second portion 310b of the first housing structure 310 and the sensor area 324 of the second housing structure 320. In this case, the second width (w2) may be longer than the first width (w1). As another example, the first portion 310a of the first housing structure 310 and the first portion 320a of the second housing structure 320, which have mutually asymmetric shapes, may form the first width (w1) of the recess, and the second portion 310b of the first housing structure 310 and the second portion 320b of the second housing structure 320, which have mutually symmetrical shapes, may form the second width (w2) of the recess. According to an embodiment, the first portion 320a and the second portion 320b of the second housing structure 320 may have different distances from the folding axis (A). The width of the recess is not limited to those illustrated. In another embodiment, the recess may have multiple widths defined by the shape of the sensor area 324 or the portions having asymmetric shapes of the first housing structure 310 and the second housing structure 320.

According to an embodiment, at least a portion of the first housing structure 310 and the second housing structure 320 may be formed of a metal or a non-metal material having a selected degree of rigidity to support the display 200. At least a portion formed of the metal material may provide a ground plane for the electronic device 101 and may be electrically connected to ground lines formed on a printed circuit board.

According to various embodiments, the sensor area 324 may be formed adjacent to a corner of the second housing structure 320 to have a predetermined area. However, the arrangement, shape, or size of the sensor area 324 are not limited to those illustrated. For example, in another embodiment, the sensor area 324 may be provided in a different corner of the second housing structure 320 or in any area between the top corner and the bottom corner. In an embodiment, components for performing various functions, embedded in the electronic device 101, may be visually exposed through the sensor area 324 or one or more openings in the sensor area 324 to the front surface of the electronic device 101. In various embodiments, the components may include various kinds of sensors. The sensor may include at least one of, e.g., a front-facing camera, a receiver, or a proximity sensor.

According to an embodiment, the first rear cover 380 may be disposed on one side of the folding axis (A) on the rear surface of the electronic device 101 and, for example, have a substantially rectangular periphery that may be surrounded by the first housing structure 310. Similarly, the second rear cover 390 may be disposed on the other side of the folding axis (A) on the rear surface of the electronic device 101 and may have its periphery surrounded by the second housing structure 320.

According to an embodiment, the first rear cover 380 and the second rear cover 390 may have a substantially symmetrical shape with respect to the folding axis (axis A). However, the first rear cover 380 and the second rear cover 390 are not necessarily completely symmetrical in shape. In another embodiment, the electronic device 101 may include the first rear cover 380 and the second rear cover 390 having various shapes. In another embodiment, the first rear cover 380 may be formed integrally with the first housing structure 310, and the second rear cover 390 may be formed integrally with the second housing structure 320.

According to an embodiment, the first rear cover 380, the second rear cover 390, the first housing structure 310, and the second housing structure 320 may form spaces where various components (e.g., a printed circuit board or a battery) of the electronic device 101 may be arranged. According to an embodiment, one or more components may be arranged or visually exposed on/through the rear surface of the electronic device 101. For example, at least a portion of a sub display may be visually exposed through a first rear surface area 382 of the first rear cover 380. In another embodiment, one or more components or sensors may be visually exposed through a second rear surface area 392 of the second rear cover 390. According to an embodiment, the sensor may include a proximity sensor and/or a rear-facing camera.

According to an embodiment, a front-facing camera visually exposed to the front surface of the electronic device 101 through one or more openings provided in the sensor area 324 or a rear-facing camera visually exposed through a second rear surface area 392 of the second rear cover 390 may include one or more lenses, an image sensor, and/or an image signal processor. The flash 313 may include, e.g., a light emitting diode (LED) or a xenon lamp. In some embodiments, two or more lenses (an infrared (IR) camera, a wide-angle lens, and a telephoto lens) and image sensors may be disposed on one surface of the electronic device 101.

Referring to FIG. 2B, the hinge case 330 may be disposed between the first housing structure 310 and the second housing structure 320 to hide the internal components. According to an embodiment, the hinge case 330 may be hidden by a portion of the first housing structure 310 and second housing structure 320 or be exposed to the outside depending on the folding state (e.g., the unfolded state, folded state, or intermediate state) of the electronic device 101.

According to an embodiment, as shown in FIG. 2A, when the electronic device 101 is in the unfolded state, the hinge case 330 may be hidden, and thus not exposed, by the first housing structure 310 and the second housing structure 320. As another example, as shown in FIG. 2B, when the electronic device 101 is in the folded state (e.g., fully folded state), the hinge case 330 may be exposed outside between the first housing structure 310 and the second housing structure 320. As another example, in an intermediate state in which the first housing structure 310 and the second housing structure 320 are folded with a certain angle, the hinge case 330 may be partially exposed outside between the first housing structure 310 and the second housing structure 320. In this case, however, the exposed area may be smaller than in the fully folded state. According to an embodiment, the hinge case 330 may include a curved surface.

According to an embodiment, the display 200 may be disposed on a space formed by the foldable housing 300. For example, the display 200 may be seated on a recess formed by the foldable housing 300, and may occupy most of the front surface of the electronic device 101. Therefore, the front surface of the electronic device 101 may include the display 200 and a partial area of the first housing 310 and a partial area of the second housing 320, which are adjacent to the display 200. The rear surface of the electronic device 101 may include a first rear cover 380, a partial area of the first housing 310 adjacent to the first rear cover 380, a second rear cover 390, and a partial area of the second housing 320 adjacent to the second rear cover 390.

According to an embodiment, the display 200 may refer to a display that can be transformed at least partially into a flat or curved shape. According to an embodiment, the display 200 may include a folding area 203, a first area 201 disposed on one side of the folding area 203 (e.g., the left side of the folding area 203 of FIG. 2), and a second area 202 disposed on the other side of the folding area 203 (e.g., the right side of the folding area 203 of FIG. 2). The display 200 may also be referred to as a flexible display 200, or foldable display 200, or bendable display 200, etc.

However, the segmentation of the display 200 as shown in FIG. 2A is merely an example, and the display 200 may be divided into a plurality of (e.g., four or more, or two, or three or more, etc.) areas depending on the structure or function of the display 200. For example, in the embodiment shown in FIG. 2A, the display 200 may be divided into areas by the folding area 203 or folding axis (axis A) extending in parallel to the y axis but, in another embodiment, the display 200 may be divided into areas with respect to another folding area (e.g., a folding area parallel to the x axis) or another folding axis (e.g., a folding axis parallel to the x axis). According to an embodiment, the display 200 may be combined with or disposed adjacent to a touch detection circuit, a pressure sensor capable of measuring the strength (pressure) of touches, and/or a digitizer for detecting a magnetic field-type stylus pen.

According to an embodiment, the first area 201 and the second area 202 may have an overall symmetrical shape with respect to the folding area 203. However, unlike the first area 201, the second area 202 may include a cut notch depending on the presence of the sensor area 324, but may have a symmetrical shape with the first area 201 in other areas. In other words, the first area 201 and the second area 202 may include parts with symmetrical shapes to each other and parts with asymmetrical shapes to each other.

Described below are the operation of the first housing 310 and the second housing 320 and each area of the display 200 depending on the state (e.g., the folded state, the unfolded state, or the intermediate state) of the electronic device 101. For example, the electronic device 101 may be in one of the folded state, the unfolded state, or the intermediate state.

According to an embodiment, when the electronic device 101 is in the unfolded state (e.g., as shown in FIG. 2A), the first housing structure 310 and the second housing structure 320 may be arranged in such a way to form an angle of 180 degrees and face the same direction. The surface of the first area 201 and the surface of the second area 202 of the display 200 may form 180 degrees with each other and face the same direction (e.g., towards the front surface of the electronic device). The folding area 203 may be coplanar with the first area 201 and the second area 202.

According to an embodiment, when the electronic device 101 is in the folded state (e.g., as shown in FIG. 2B), the first housing structure 310 and the second housing structure 320 may be disposed to face each other. The surface of the first area 201 and the surface of the second area 202 of the display 200 may form a narrow angle (e.g., ranging from 0 degrees to 10 degrees) and face each other. The folding area 203 may be at least partially composed of a curved surface with a certain curvature.

According to an embodiment, when the electronic device 101 is in the intermediate state (folded state), the first housing structure 310 and the second housing structure 320 may be disposed at a certain angle with respect to each other. The surface of the first area 201 and the surface of the second area 202 of the display 200 may form an angle larger than that in the folded state and smaller than that in the unfolded state. The folding area 203 may at least partially composed of a curved surface with a certain curvature, which may be smaller than that in the folded state.

According to an embodiment, the electronic device 101 may be of an in-folding type and/or an out-folding type. In-folding type electronic devices enable an in-folding state in which the flexible display 200 is not exposed to the outside in a fully folded status, e.g., the flexible display 200 may be folded towards the front direction. Out-folding type electronic devices 101 enable an out-folding state in which the flexible display 200 is visually exposed to the outside in a fully folded status, e.g., the flexible display 200 may be folded towards the rear direction. The electronic device 101 may be configured to enable both in-folding and out-folding. The electronic device 101 may also be configured to enable only one of the in-folding or out-folding.

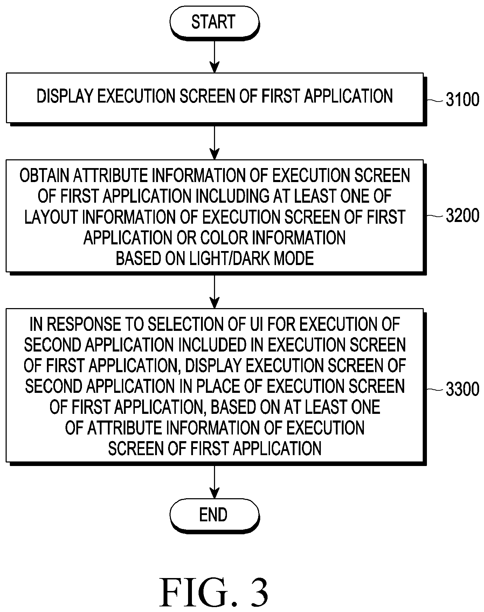

FIG. 3 is a diagram illustrating an operation of switching an execution screen of an application of an electronic device.

Referring to FIG. 3, in operation 3100, an electronic device (e.g., the electronic device 101 of FIG. 1 or the processor 120 of FIG. 1) may display an execution screen of a first application.

According to embodiment, the first application may be a camera application. The camera application may be for controlling e.g. operations related to the camera module 180.

The execution screen of the first application may be configured in various ways and may comprise one or more of the following components. For example, the execution screen of the first application may include a preview area displaying an image obtained by a camera (e.g., the camera module 180 of FIG. 1) in real time. The preview area may be included in full screen on the execution screen of the first application.

According to an embodiment, the execution screen of the first application may include an area displaying at least one image stored in a memory (e.g., the memory 130 of FIG. 1) and/or an area displaying detailed information corresponding to the preview.

According to an embodiment, the execution screen of the first application may also include a partial area of the execution screen as a preview area, and may use the remaining area as an area displaying at least one image stored in the memory and/or as an area displaying detailed information corresponding to the preview.

According to an embodiment, the area displaying at least one image stored in the memory may be an area in which the at least one image is arranged in a single column or two or more columns.

According to an embodiment, the detailed information corresponding to the preview may include at least one of date information, time information, location information, camera lens information (e.g., type of lens), and shooting mode information (e.g., a shooting mode such as a portrait mode, or a food mode), person information contained in the preview, and/or object information contained in the preview, all of which are related to the preview.

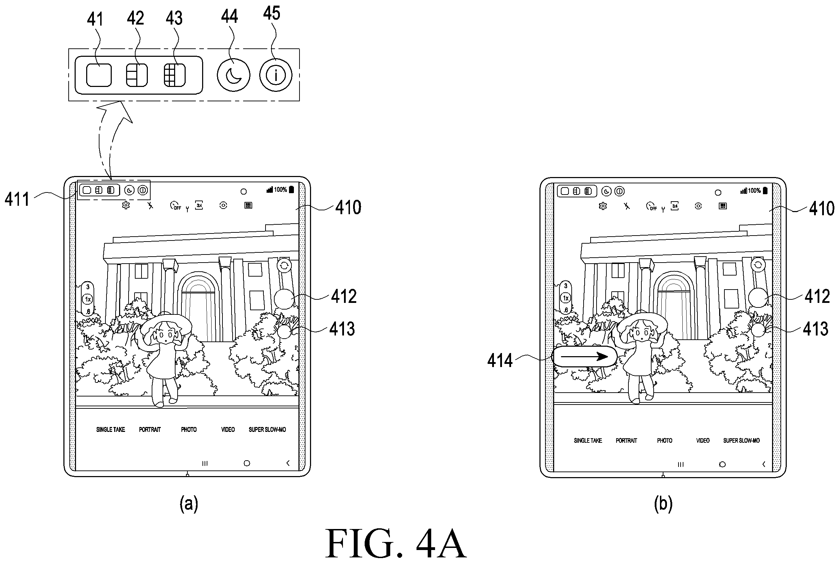

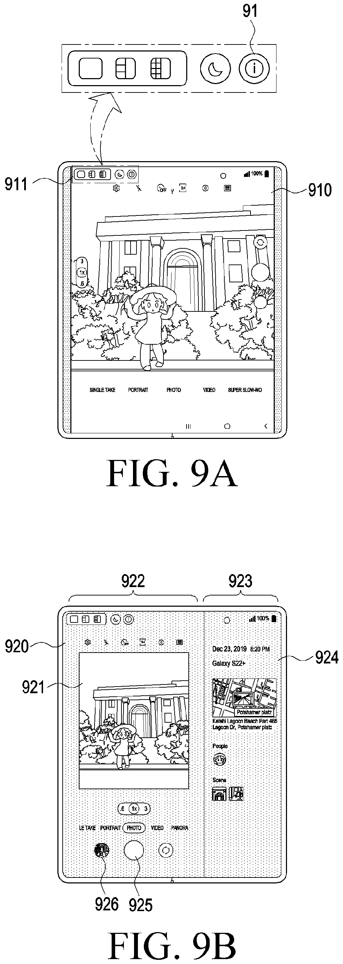

The configuration of the execution screen of the first application will be further described with reference to FIGS. 4A to 4C and 9A to 9C below.

It has been described above that the first application is a camera application, but it is not limited thereto when actually implemented. The first application may also be an application capable of displaying still images or moving images, such as a browser application, a chat application, or a video playback application. For example, the first application may in general be an image-related application for displaying images. The images may be received by for example the camera module 180, and/or by other components of the electronic device, e.g., downloaded and then displayed on the display/execution screen of the first application.

According to an embodiment, in operation 3200, the electronic device may obtain(or identify) attribute information of the execution screen of the first application including at least one of layout information of the execution screen of the first application or color information. According to an embodiment, attribute information of the execution screen of the application may include information related to visual characteristics of the execution screen of the application.

According to an embodiment, the layout information may include arrangement information for at least one of a first area displaying a preview, a second area displaying at least one stored image, or a third area displaying detailed information corresponding to the preview.

According to an embodiment, the layout information may include information about position and/or size of at least one of the first area, the second area, or the third area. According to an embodiment, the layout information may include at least one of boundary coordinate information, horizontal length information, vertical length information, or center coordinate information for at least one of the first area, the second area, or the third area. The layout information may for example be information for determining a layout and/or a layout configuration of the first application.

For example, when the electronic device is in full screen view mode displaying a preview on the entire area of the touch screen, only the first area may be included in the entire area of the execution screen of the first application, and the second and third areas may not be included. In this case, the layout information may include only information on whether the electronic device is in full screen view mode, and may not include coordinate information and/or length information.

The color information, of the execution screen of the first application may include background color information and/or object color information. The color information of the execution screen may be based on the light/dark mode. The color information of the execution screen may include color information of an area whose color changes according to the light/dark mode. The background color information may include color information of an area excluding images, text and/or objects included in the execution screen, and/or color information of the lowest layer among a plurality of layers included in the execution screen.

For example, the background color of the execution screen of the first application based on the light mode may be a bright color (e.g., white). The background color of the execution screen of the first application based on the dark mode may be a dark color (e.g., black). The background color information may be indicative of the light/dark mode of the background. E.g., if the background color information indicates the light/dark mode, the background color of the first application may accordingly be set to light/dark, respectively. The background color information is not limited to white or black, and may include gray or RGB colors.

For example, the object color information may include color information of an object other than the background color of the execution screen of the first application. For example, object color information may include text color information and/or button color information. For example, in the light mode in which the background color is bright, the font color of the text may be black. For example, in the dark mode in which the background color is dark, the font color of the text may be white. The object color information may include color information of one or more objects.

The attribute information of the first application may further include attribute information of an object such as font type information for text or shape information for buttons.

The light/dark mode may be set for each application based on a manufacturer or a user input. For example, a camera application may be set to a dark mode based on manufacturer settings, while a photo album application may be set to a light mode based on manufacturer settings. The camera application and/or other applications may be set to a light mode or a dark mode based on user settings.

According to an embodiment, a light mode (e.g., a day mode) may be automatically applied when the surroundings of the electronic device are bright, such as daytime, and a dark mode (e.g., a night mode) may be automatically applied when the surroundings of the electronic device are dark, such as night.

According to an embodiment, the electronic device may display a plurality of user interfaces (UIs)(or UI items) for changing attribute information of the execution screen of the first application in a partial area of the execution screen of the first application. According to an embodiment, the plurality of UIs may be icons corresponding to multiple layouts, light/dark modes, or detailed information modes, respectively. According to an embodiment, a UI corresponding to the current layout among the plurality of UIs may be highlighted.

According to an embodiment, the plurality of UIs may be objects included in the execution screen of the first application.

According to an embodiment, the plurality of UIs may be pop-up screens of a upper layer than the execution screen of the first application. According to an embodiment, a plurality of UIs may be displayed through a drag input in an area including an edge of the display.

According to an embodiment, the plurality of UIs may be displayed in a tray format in a partial area of the execution screen of the first application. The tray format may correspond to a format in which selectable options are grouped together and displayed. Examples of the plurality of UIs will be described in more detail below with reference to FIG. 4A.

According to an embodiment, the electronic device may change the execution screen of the first application based on attribute information corresponding to a selected UI from among the plurality of UIs. For example, the electronic device may change the execution screen of the first application based on the layout and/or background color corresponding to the selected UI.

An operation of changing an attribute of the execution screen of the first application through the plurality of UIs will be described with reference to FIGS. 4A to 4C below.

According to an embodiment, the electronic device may change the execution screen of the first application based on attribute information corresponding to a touch input received through a touch screen (e.g., the display module 160 of FIG. 1). For example, when swipe input, pinch-in input, or pinch-out input is received, the electronic device may change the execution screen of the first application to a layout corresponding to the received touch input.

An operation of changing the attribute of the execution screen of the first application based on the touch input received through the touch screen will be described with reference to FIGS. 4A to 4C.

According to an embodiment, the electronic device may display an object (e.g, an icon or text) representing the first application on a partial area of the execution screen of the first application.

It has been described that operation 3200 of obtaining the attribute information of the execution screen of the first application is performed before operation 3300, which will be described below, but the disclosure is not limited thereto, and operation 3200 of obtaining the attribute information of the execution screen of the first application may be also performed after selecting a UI for executing a second application, which is part of operation 3300, is performed. When the attribute information of the execution screen of the first application obtained in operation 3100 is used in operation 3300, operation 3200 of obtaining attribute information of the execution screen of the first application may be omitted.

According to an embodiment, in operation 3300, in response to selection of a UI (such as a button or an icon for executing the second application, or a quick-view button) for executing the second application included in the execution screen of the first application, the electronic device may display the execution screen of the second application, based on at least one of attribute information of the execution screen of the first application. For example, the execution screen of the second application may be one to which at least a part of the obtained attribute information of the first application is applied.

For example, the electronic device may display the execution screen of the second application by replacing the execution screen of the first application, based on at least one of the attribute information of the execution screen of the first application. The electronic device may display the execution screen of the second application by overlapping(or stacking) on the execution screen of the first application, based on at least one of the attribute information of the execution screen of the first application. The electronic device may delete the execution screen of the first application and display the execution screen of the second application, based on at least one of the attribute information of the execution screen of the first application.

According to an embodiment, the electronic device may display an execution screen of the first application on one area of the split screen. When an input for executing the second application is received, the electronic device may display an execution screen of the second application based on at least one of attribute information of the execution screen of the first application, in the one area where the execution screen of the first application was displayed. According to an embodiment, when an input for executing the second application is received, the electronic device may display an execution screen of the second application based on at least one of attribute information of the execution screen of the first application, in the other area than the one area of the entire area, where the execution screen of the first application was displayed.

According to an embodiment, the electronic device may display the execution screen of the first application on the pop-up screen or the remaining area other than the pop-up screen of the entire screen. When an input for executing the second application is received, the electronic device may display an execution screen of the second application based on at least one of attribute information of the execution screen of the first application, on the pop-up screen or the remaining area other than the pop-up screen of the entire screen, where the execution screen of the first application was displayed.

According to an embodiment, the electronic device may identify a preset attribute information of an execution screen of the second application, in response to receiving the selection of the UI item for executing the second application displayed in the changed execution screen of the first application. The electronic device may display the execution screen of the second application to which at least part of the identified attribute information of the execution screen of the first application is applied, based on the preset attribute information being different with at least part of the identified attribute information. According to an embodiment, the electronic device may display the execution screen of the second application based on the preset attribute information, if the preset attribute information of the execution screen of the second application is the same as the identified attribute information of execution screen of the first application.

According to an embodiment, when the electronic device is a foldable device, the execution screen of the first application may be displayed on the first display (or first flexible display) disposed on one side of the foldable device in a state that the foldable device is fully or partially unfolded. In a state that the execution screen of the first application is displayed on the first display, as the foldable device is folded, the execution screen of the second application corresponds to the first application may be displayed on the second display (or second flexible display) disposed on the other side of the foldable device. The electronic device may display an execution screen of the second application based on attribute information of the execution screen of the first application. For example, even if an application whose execution screen is displayed on the first display and an application displayed on the second display are applications that perform the same function (eg, a camera application), they are separate applications and may have the same attribute information of the execution screen or not.

For example, when the attribute information of the execution screen of the second application set by the manufacturer or the user is different from the attribute information of the execution screen of the first application, the electronic device that is a foldable device may display, on the second display, the execution screen of the second application based on the attribute information of the execution screen of the first application.

According to an embodiment, an electronic device that is a foldable device may display an execution screen of a second application through the second display in a completely or partially folded state. In a state that the execution screen of the second application is displayed, as the electronic device is unfolded, the execution screen of the first application corresponding to the second application may be displayed through the first display. When the attribute information of the execution screen of the first application set by the manufacturer or the user is different from the attribute information of the execution screen of the second application, the electronic device may display the execution screen of the first application based on the attribute information of execution screen of the second application.

According to an embodiment, the electronic device may display the execution screen of the second application using the same attribute information as that of the execution screen of the first application. I.e., even though a second application is selected while the first application is running and being displayed, the second application may be displayed while keeping the same attribute information that was used specifically for the first application.

For example, the electronic device may display the execution screen of the second application with the same layout as that of the execution screen of the first application. According to an example, the electronic device may display the execution screen of the second application with the same color as that of the execution screen of the first application. For example, the electronic device may display the execution screen of the second application with the same background color and/or object color as those of the execution screen of the first application. The electronic device may display the execution screen of the second application with the same layout and color as those of the execution screen of the first application. The electronic device may display the execution screen of the second application having the same object attribute as the object attribute (e.g., text font or button type) of the execution screen of the first application.

According to an embodiment, the second application may be an application which is associated with the function of the first application.

According to an embodiment, the second application may be an application for identifying or editing images. For example, the second application may be an application for identifying or editing images obtained through the first application. For example, the second application may be a photo album application (e.g., a photo gallery application) for identifying images obtained through the camera application or an image editing application.

According to an embodiment, when the first application is a calendar application, the second application may be a schedule management application.

According to an embodiment, when an attribute of the execution screen of the first application is changed through one of the plurality of UIs displayed on the execution screen of the first application, the electronic device may obtain the execution screen of the second application by using the attribute information of the execution screen of the first application whose the attribute has been changed, in response to selection of an UI for executing the second application included in the execution screen of the first application whose attribute has been changed.

According to an embodiment, the electronic device may display a plurality of user interfaces (UIs) for changing attribute information of the execution screen of the second application in a partial area of the execution screen of the second application. According to an embodiment, the plurality of UIs may be icons corresponding to multiple layouts, light/dark modes, or detailed information modes, respectively. According to an embodiment, a UI corresponding to the current layout among the plurality of UIs may be highlighted. The number and type of the plurality of UIs displayed on the execution screen of the second application may be the same as or different from the plurality of UIs displayed on the execution screen of the first application.

The operation of changing the attribute of the execution screen of the first application through the plurality of UIs will be described below in further detail with reference to FIGS. 4A to 4C.

According to an embodiment, the electronic device may display an object (e.g, an icon or text) representing the second application on a partial area of the execution screen of the second application.

According to an embodiment, when the attribute of the execution screen of the first application is changed based on attribute information corresponding to the touch input received through the touch screen, the electronic device may obtain the execution screen of the second application by using the attribute information of the execution screen of the first application whose attribute has been changed, in response to selection of the UI for executing the second application included in the execution screen of the first application whose attribute has been changed.

According to an embodiment, when the attribute of the execution screen of the first application is changed, the electronic device may store the changed attribute information as the attribute information of the execution screen of the first application. In response to selection of the UI for executing the second application included in the execution screen of the first application whose attribute has been changed, the electronic device may transmit the stored attribute information of the execution screen of the first application to the second application. The electronic device may obtain the execution screen of the second application by using the attribute information of the execution screen of the first application transmitted to the second application.

According to an embodiment, it has been described above that when the attribute of the execution screen of the first application is changed, the changed attribute information is stored as the attribute information of the execution screen of the first application; however, the electronic device may also obtain the attribute information of the execution screen of the first application, in response to selection of the UI for executing the second application included in the execution screen of the first application whose attribute has been changed, and may transmit the obtained attribute information of the execution screen of the first application to the second application.

An operation of changing the attribute of the execution screen of the first application based on the touch input received through the touch screen will be described in further detail with reference to FIGS. 4A to 4C.

According to an embodiment, even in case predetermined attributes (e.g., layout, background color, and/or object color) of the execution screens of the first and second applications are different from each other, the electronic device may temporarily change the attribute of the execution screen of the second application based on the attribute of the execution screen of the first application, when the execution screen of the second application is displayed through the UI included in the execution screen of the first application.

According to an embodiment, even in case the attribute of the displayed execution screen of the first application is different from the predetermined attribute (e.g., layout, background color, and/or object color) of the execution screen of the first application due to user setting and/or surrounding environment, the electronic device may temporarily change the attribute of the execution screen of the second application based on the attribute of the displayed execution screen of the first application rather than the predetermined attribute of the execution screen of the first application, only when the execution screen of the second application is displayed through the UI included in the execution screen of the first application. I.e., for example, conditionally on the execution screen being displayed through the UI included in the execution screen of the first application, the execution of the second application can be based on attribute-information of the first application. Such a specific condition may, similarly as described above, enable a smooth human-machine interaction and/or efficient processing.

According to an embodiment, even when returning to the first application while the execution screen of the second application is displayed, the electronic device may temporarily change the attribute of the execution screen of the first application based on the attribute of the execution screen of the second application.

According to an embodiment, in a state where the execution screen of the first application is displayed, the electronic device may obtain an image captured of the preview displayed in the first area and information associated with the image, based on reception of an input (e.g., user input using an UI) for capturing the preview displayed in the first area. The information associated with the image may include, for example, one or more of a capture date, a capture time, a capture location, a capture mode, and/or analysis results of a person/object included in the captured image. The image captured of the preview displayed in the first area may be displayed in a second area displaying at least one stored image.

According to an embodiment, the electronic device may obtain the execution screen of the second application by using the image and the information associated with the image, in response to the selection of the UI for executing the second application included in the execution screen of the first application.

According to an embodiment, in case the first application is a camera application and the second application is a photo album application (e.g., a photo gallery application), when a button (or icon) for executing the photo album application is selected on the execution screen of the camera application, the electronic device may transmit, to the photo album application, at least one of attribute information (e.g., layout and/or background color) of the execution screen of the camera application, the captured image, and information (e.g., date, time, location, shooting mode, image analysis results) associated with the captured image.

According to an embodiment, the electronic device may obtain the execution screen of the photo album application based on the at least one of attribute information of the execution screen of the camera application, the captured image, and the information associated with the captured image, transmitted from the camera application.

According to an embodiment, the electronic device may display the obtained execution screen of the photo album application, and may further display information (e.g., a detailed subject item analysis, and generation of association information with other stored images) analyzed by an image analysis engine of the photo album application, as well as key information (e.g., name, place, or favorite display) tagged by the user in the photo album application.

According to an embodiment, in response to selection of the UI for executing the second application included in the execution screen of the first application, the electronic device may obtain the execution screen of the second application by using position and/or size information of at least one of the first to third areas. According to an example, the electronic device may obtain the execution screen of the second application by using at least one of boundary coordinate information, horizontal length information, vertical length information, or center coordinate information of each of at least one of the first area, the second area, or the third area.

As the examples/embodiments described above, by displaying the execution screen of the second application based on the attribute information of the execution screen of the first application, it is possible to provide consistent screen layout and detailed functions, and provide users with a more convenient and useful photo and video viewing experience.

Furthermore, the execution screen of the second application can be displayed while maintaining the colors (e.g., background color and/or object color) based on the layout and light/dark mode of the execution screen of the first application, thereby reducing the resources required for rendering the execution screen of the second application.

According to an embodiment, the electronic device may determine attribute information of an execution screen of the second application based on an execution path of the second application. For example, when an icon for the execution of the second application included in the home screen, lock screen, or application icon tra is selected, the electronic device may display the execution screen of the second application based on attribute information of the execution screen of the second application set by the manufacturer or the user. For example, when a UI for executing a second application included in an execution screen of a first application is selected, the electronic device may display an execution screen of the second application based on attribute information of the execution screen of the first application.

For example, when an icon for the execution of a photo album application included in the home screen, lock screen, or application icon tra is selected, the electronic device may display the photo album application in a light mode with a bright background based on attribute information set by the manufacturer or the user. For example, when selecting a UI for executing a photo album application included in a camera application in a dark mode with a dark background, the electronic device may display the execution screen of the photo album application in a dark mode based on the attribute information of the camera application, even though the attribute information set for the execution screen of the photo album application is in the light mode.

According to an embodiment, the electronic device may be a foldable electronic device comprising a hinge. The layout information may include arrangement information for at least one of the first to third areas based on the area where the hinge is disposed.

According to an embodiment, the electronic device may further include at least one sensor (e.g., the sensor module 176 of FIG. 1). The electronic device may obtain, in addition or instead of the above-described features, the illuminance of the surrounding environment through the at least one sensor, and obtain the execution screen of the second application having a background color obtained based on the illuminance of the surrounding environment, in response to the selection of the UI for executing the second application included in the execution screen of the first application. For example, if the illuminance of the surrounding environment is less than a set value and the background color of the execution screen of the first application is a color corresponding to the light mode, the electronic device may obtain the execution screen of the second application having the background color corresponding to the dark mode, in response to the selection of the UI for executing the execution screen of the second application included in the execution screen of the first application.

According to an embodiment, based on reception of a user input for returning to the first application while the execution screen of the second application is displayed, the electronic device may display the execution screen of the first application in place of the execution screen of the second application, based on attribute information of the execution screen of the second application. For example, when a user input for selecting a button for a "back" function is received while the execution screen of the second application is displayed, the electronic device may display the execution screen of the first application in place of the execution screen of the second application, based on the attribute information of the execution screen of the second application.

According to an embodiment, when a user input for selecting a button for the "back" function is received after changing the attribute information of the execution screen of the second application while the execution screen of the second application is displayed, the electronic device may display the execution screen of the first application in place of the execution screen of the second application, based on the attribute information of the execution screen of the second application of which the attribute has been changed.

FIG. 4A is a diagram illustrating attribute information of an execution screen of an application of an electronic device.

Referring to FIGS. 4A(a) and 4B(b), the electronic device (e.g., the electronic device 101 of FIG. 1 or the processor 120 of FIG. 1) may display an execution screen of a first application. According to an embodiment, the first application may be a camera application.

Referring to FIG. 4A(a), the execution screen of the first application may display a preview screen 410 and a plurality of UIs 411 for changing attributes of the execution screen.

According to an embodiment, the plurality of UIs 411 may include a first UI 41 for a full screen view, a second UI 42 for a first split view, a third UI 43 for a second split view, a fourth UI 44 for setting a light/dark mode, and/or a fifth UI 45 for a detailed information display mode.

According to an embodiment, the full screen view may be a mode for displaying a preview or an image on the entire area of the touch screen of the electronic device.

According to an embodiment, the first split view and the second split view may be modes in which a preview or a selected image is displayed in the first area, which is a partial area of the touch screen, and at least one image (e.g., a thumbnail) pre-stored in a memory (e.g., the memory 130 of FIG. 1) is displayed in a second area, which is a remaining area other than the first area in the entire area.

According to an embodiment, in the first split view, at least one pre-stored image may be displayed in a single column in the second area. For example, in the first split view, at least one image displayed in the second area may have the same aspect ratio as that of the actual image. According to an embodiment, the at least one pre-stored image may include only an image captured through a camera (e.g., the camera module 180 of FIG. 1) of the electronic device. According to an embodiment, the at least one pre-stored image may be displayed in the second area in the order of recently captured images through the camera of the electronic device.

According to an embodiment, in the second split view, at least one pre-stored image may be displayed in the second area in two or more columns (e.g., three columns). In the second split view, at least one image displayed in the second area may have a different aspect ratio (e.g., 1:1) from the aspect ratio of the actual image.

According to an embodiment, in the light mode, the background color of the execution screen of the first application may be a bright color (e.g., white). According to an embodiment, in the dark mode, the background color of the execution screen of the first application may be a dark color (e.g., black).

According to an embodiment, the object color information may include color information of an object other than the background color of the execution screen of the first application. For example, the object attribute information may include color information of a text and/or color information of a button. For instance, in a light mode where a background color is bright, the font color of the text may be black. Similarly, for example, in a dark mode where a background color is dark, the font color of the text may be white.

According to an embodiment, the light/dark mode may be set for each application by a manufacturer or a user input. For example, a camera application may be set to a dark mode by the manufacturer's settings. A photo album application may be set to a light mode by the manufacturer's settings, and other applications may be set to either a light or dark mode by user settings. For example, when an icon for executing a camera application included in a home screen, a lock screen, or an application icon tra is selected, the electronic device may display the execution screen of the camera application in a dark mode with a dark background screen. According to an embodiment, when an icon for executing the photo album application included in the home screen, lock screen, or application icon tra is selected, the electronic device may display the execution screen of the photo album application in a light mode with a bright background screen.

According to an embodiment, a light mode (e.g., a day mode) may be automatically applied when the surroundings of the electronic device are bright, such as daytime, and a dark mode (e.g., a night mode) may be automatically applied when the surroundings of the electronic device are dark, such as night.

According to an embodiment, the detailed information display mode may be a mode in which a preview or a selected image is displayed in the first area, which is a partial area of the touch screen, and detailed information related to the preview or selected image is displayed in the third area, which is the remaining area other than the first area in the entire area. According to an embodiment, the detailed information may include at least one of date information, time information, location information, camera lens information (e.g., lens type), shooting mode information (a shooting mode such as a portrait mode, or a food mode) related to the preview or selected image, person information contained in the preview or selected image, and/or object information contained in the preview or selected image.

FIG. 4A illustrates that the preview screen of the execution screen 410 of the first application can be displayed in a full-screen view. However, the preview screen may also be a first split view, a second split view, or a detailed information display mode depending on a mode set to be displayed when the first application is executed and/or a mode applied when the first application is last executed.

According to an embodiment, the execution screen 410 of the first application may include a preview screen, a capture button 412 for capturing an image displayed on the preview screen, and a button (or icon) 413 for executing the photo album application for identifying the captured image.

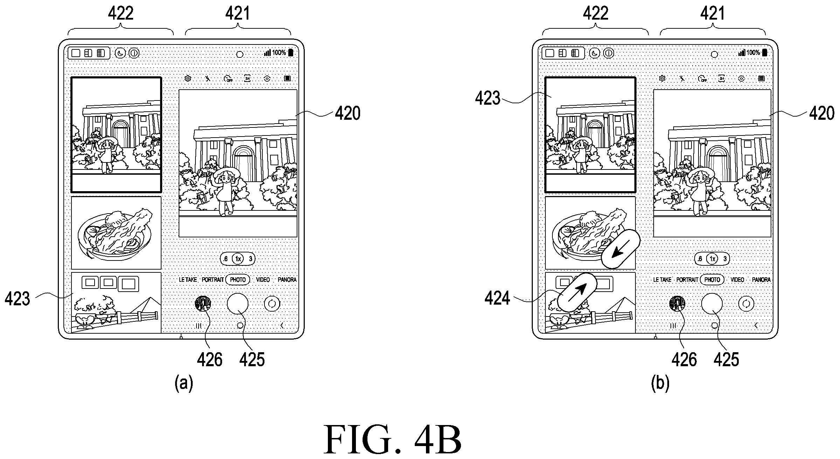

For illustration, an operation of the electronic device when the second UI 42 for the first split view is selected from among the plurality of UIs 411 will be described below with reference to FIG. 4B.

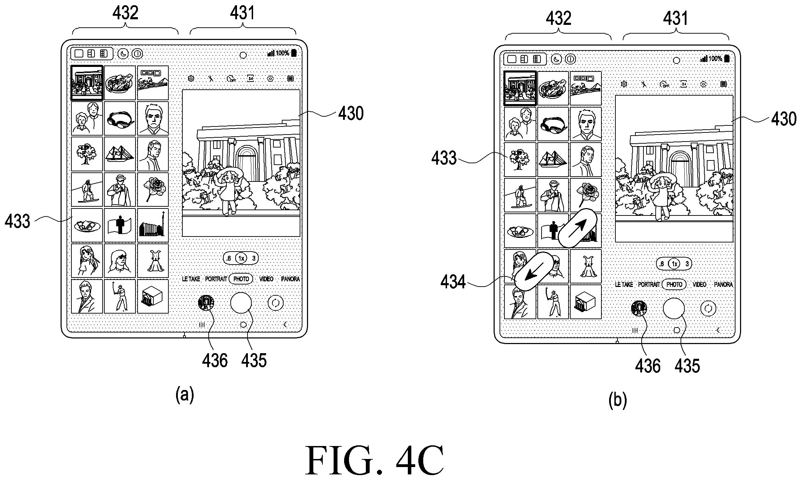

For illustration, an operation of the electronic device when the third UI 43 for the second split view is selected from among the plurality of UIs 411 will be described below with reference to FIG. 4C.

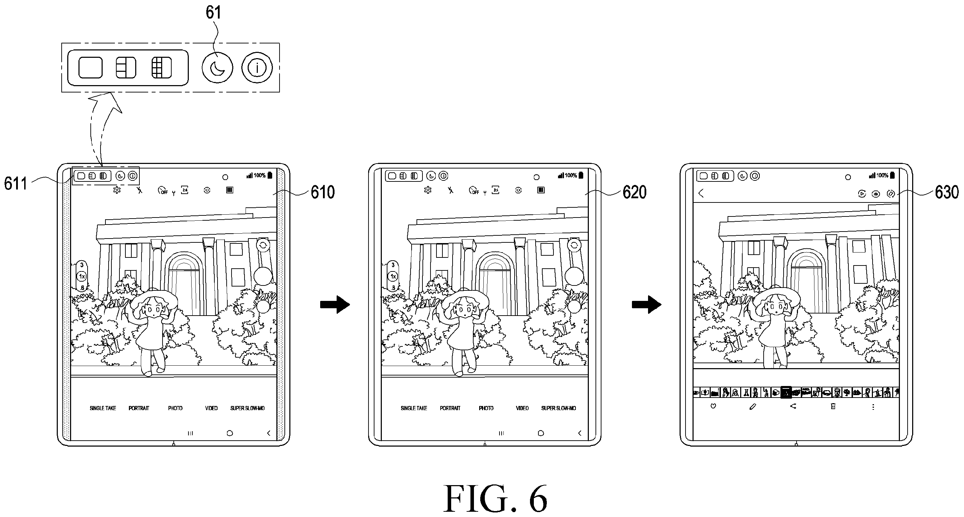

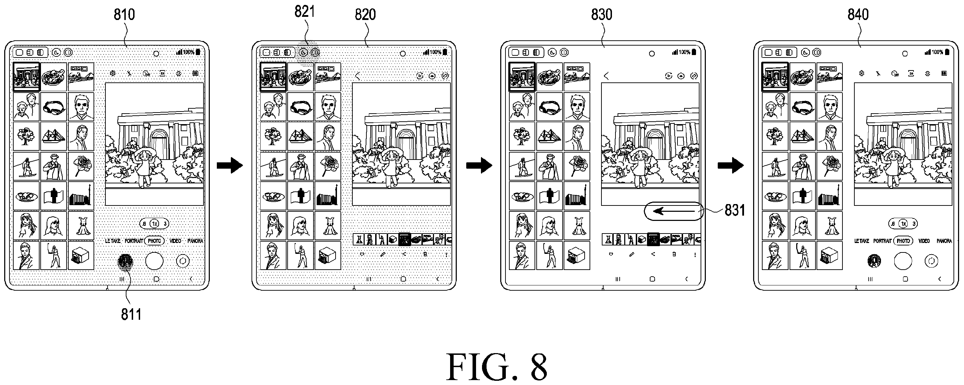

For illustration, an operation of the electronic device when the fourth UI 44 for setting the light/dark mode is selected from among the plurality of UIs 411 will be described below with reference to FIGS. 6 and 8.

For illustration, an operation of the electronic device when the fifth UI 45 for the detailed information display mode is selected from among the plurality of UIs 411 will be described below with reference to FIG. 9A to FIG. 9C.

Referring to FIG. 4A(b), the execution screen of the first application may be a full-screen view where the preview screen 410 is displayed on the entire area of the touch screen.

According to an embodiment, when a user input 414 for changing to a first split view is received, the electronic device may change the attribute of the execution screen of the first application, as illustrated in FIG. 4B(b). The user input 414 for changing to the first split view may be, for example, a swipe input starting at a boundary of one side of the touch screen. For example, the user input 414 for changing to the first split view may be a swipe input starting at the left boundary of the touch screen.

According to an embodiment, when the folding angle of the electronic device is changed, the electronic device may change the attribute of the execution screen of the first application to the first split view. For example, when the folding angle of the electronic device is changed through the folding operation based on the hinge while the electronic device is fully unfolded, the electronic device may change the attribute of the execution screen of the first application to the first split view.

FIG. 4B is a diagram illustrating attribute information of an execution screen of an application of an electronic device. For example, FIG. 4B (a) may be an execution screen of a camera application displayed when the second UI 42 is selected from among the plurality of UIs 411 of FIG. 4A(a). For example, FIG. 4B(b) may be an execution screen of camera application displayed when a user input 414 for changing to the first split view of FIG. 4A(b) is received.

Referring to FIGS. 4B(a) and 4B(b), the electronic device may display a preview screen 420 in the first area 421, which is a partial area of the entire area of the touch screen, and may display at least one image 423 pre-stored in the second area 422, which is the remaining area of the entire area. According to an embodiment, the at least one pre-stored image 423 may be displayed in thumbnail form and may have the same aspect ratio as the actual image.

According to an embodiment, the first area 421 may include the preview screen 420, a capture button 425 for capturing an image displayed on the preview screen, and a button (or icon) 426 for executing a photo album application for identifying the captured image.

Referring to FIG. 4B(b), when a user input 424 for changing to the second split view is received, the electronic device may change the attribute of the execution screen of the first application as illustrated in FIG. 4C. The user input 424 for changing to the second split view may be, for example, a pinch-in input on the second area of the touch screen.

FIG. 4C is a diagram illustrating attribute information of an execution screen of an application of an electronic device according to an embodiment. For example, FIG. 4C(a) may be an execution screen of a camera application displayed when the third UI 43 is selected from among the plurality of UIs 411 of FIG. 4A. For example, FIG. 4C(b) may be an execution screen of a camera application displayed when a user input 422 for changing to the second split view of FIG. 4B(b) is received.

Referring to FIGS. 4C(a) and 4C(b), the electronic device may display the preview screen 430 in the first area 431, which is a partial area of the entire area of the touch screen, and display at least one pre-stored image 433 in multiple columns (e.g., two or more columns) in the second area 432, which is the remaining area other than the first area in the entire area. According to an embodiment, the at least one pre-stored image 433 may be displayed in thumbnail form and may have a different aspect ratio (e.g., 1:1) from the aspect ratio of the actual image.

According to an embodiment, the first area may include a preview screen 430, a capture button 435 for capturing an image displayed on the preview screen, and a button (or icon) 436 for executing a photo album application for identifying the captured image.

Referring to FIG. 4C(b), when a user input 434 for changing to the first split view is received, the electronic device may change the attribute of the execution screen of the first application as illustrated in FIG. 4B. The user input 434 for changing to the first split view may be a pinch-out input in the second area of the touch screen.

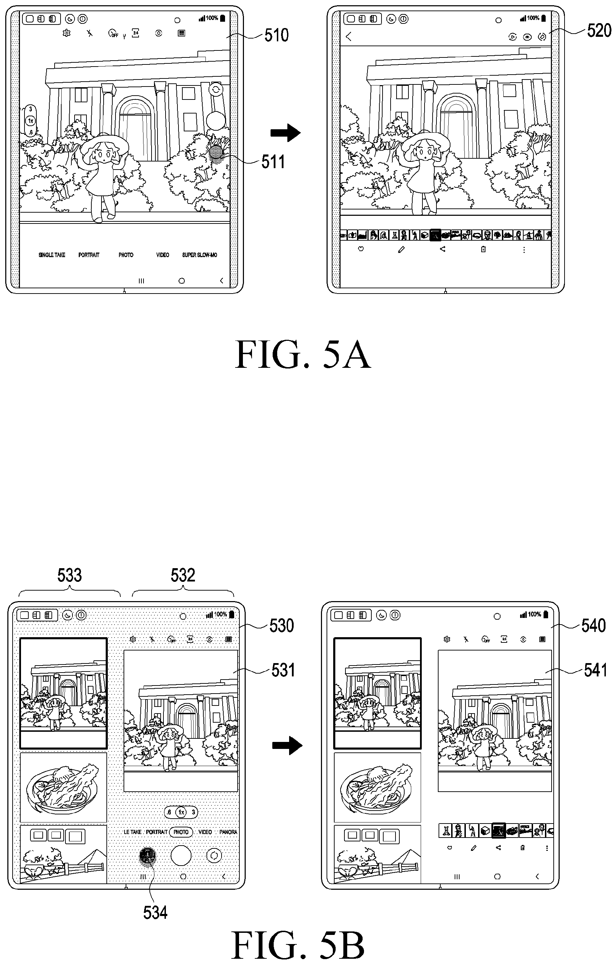

FIG. 5A is a diagram illustrating an operation of changing an application being executed while maintaining attribute information of an electronic device. For example, FIG. 5A is a diagram illustrating an example of displaying an execution screen of a second application when the execution screen of the first application is in full screen view as illustrated in FIG. 4A. According to an example, the first application may be a camera application, and the second application may be a photo album application, but the present disclosure is not limited thereto.

Referring to FIG. 5A, an electronic device (e.g., the electronic device 101 of FIG. 1 or the processor 120 of FIG. 1) may display an execution screen 510 of a first application.

The electronic device may display the preview screen of the camera application on the entire area of a touch screen (e.g., the display module 160 of FIG. 1).

In response to the selection of the UI 511 for executing the second application, the UI 511 being included in the execution screen of the first application and corresponding for example to a button or icon for the second application or to a quick-view button, the electronic device may display the execution screen 520 of the second application in place of the execution screen of the first application, based on the attribute information (e.g., a full screen view) of the execution screen of the first application.

According to an embodiment, the electronic device may display the execution screen 520 of the second application based on at least one of the layout information of the execution screen of the first application or color information (e.g., background color and/or object color) based on the light/dark mode.

According to an embodiment, the execution screen 520 of the second application may display a recently captured image in an area corresponding to the preview area of the execution screen 510 of the first application.

According to an embodiment, the background color of the execution screen 520 of the second application may be the same as the background color (e.g., a color (e.g., white) corresponding to the light mode, or a color (e.g., black) corresponding to the dark mode) of the execution screen 510 of the first application.

Although FIG. 5A illustrates that the layout and background color of the execution screen 510 of the first application and the execution screen 520 of the second applications are maintained, the electronic device may instead maintain only the background color of the execution screen 510 of the first application, and may display the execution screen 520 of the second application in a layout according to the setting of the second application. Accordingly, the layout of the execution screen 520 of the second application may be different from the layout of the execution screen 510 of the first application. According to an example, the electronic device may maintain only the layout of the execution screen 510 of the first application, and may display the execution screen 520 of the second application as the background color according to the setting of the second application. Accordingly, the background color of the execution screen 520 of the second application may be different from the background color of the execution screen 510 of the first application.

FIG. 5B is a diagram illustrating an operation of changing an application being executed while maintaining attribute information of an electronic device.

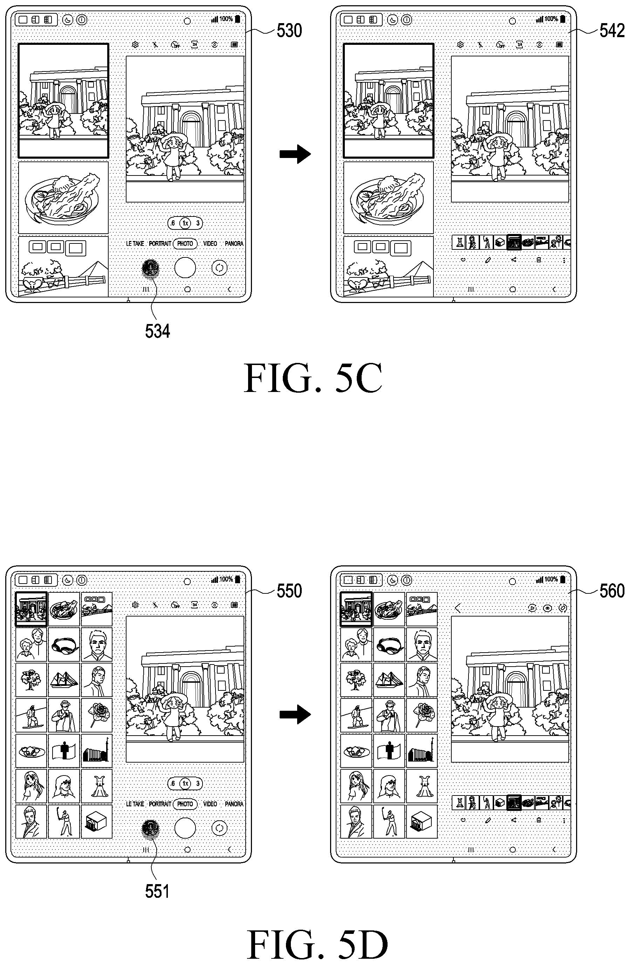

FIG. 5C is a diagram illustrating an operation of changing an application being executed while maintaining attribute information of an electronic device.

For example, FIGS. 5B and 5C are diagrams illustrating an embodiment of displaying an execution screen of a second application when an execution screen of a first application is in a first split view, as illustrated in FIG. 4B. According to an embodiment, the first application may be a camera application and the second application may be a photo album application, but the present disclosure is not limited thereto.

Referring to FIG. 5B, the electronic device (e.g., the electronic device 101 of FIG. 1 or the processor 120 of FIG. 1) may display an execution screen 530 of a first application.

According to an embodiment, the electronic device may display a preview screen 531 of a camera application in a first area 532, which is a partial area of the entire area of the touch screen (e.g., the display module 160 of FIG. 1), and may display at least one image stored in a memory (e.g., the memory 130 of FIG. 1) in a second area 533, which is the remaining area of the entire area excluding the first area 532. According to an embodiment, at least one image in the second area 533 may be displayed in a single column.

According to an embodiment, in response to selection of a UI 534 for executing a second application included in the execution screen 530 of the first application, such as a button or icon for executing the second application, or a quick-view button, the electronic device may display an execution screen 540 of the second application in place of the execution screen of the first application, based on the attribute information of the execution screen of the first application.

According to an embodiment, the electronic device may display the execution screen 540 of the second application based on at least one of the layout information of the execution screen of the first application or the background color information based on the light/dark mode.

According to an embodiment, the execution screen 540 of the second application may display a recently captured image 541 in the area corresponding to the preview area 531 of the execution screen 530 of the first application. The execution screen 540 of the second application may keep the display of at least one image in the area corresponding to the second area 533 of the execution screen 530 of the first application. According to an example, when one of the at least one images included in the second area of the execution screen 540 of the second application is selected, the electronic device may display the selected image in the area corresponding to the preview area 531 of the execution screen 530 of the first application.

According to an embodiment, the electronic device may maintain only the layout of the execution screen 530 of the first application, and may display the execution screen 540 of the second application with a background color based on the setting of the second application. As a result, the background color of the execution screen 540 of the second application may be different from that of the execution screen 530 of the first application.

Referring to FIG. 5C, in response to the selection of the UI 534 (e.g., a button or icon for executing the second application or a quick-view button) for executing the second application included in the execution screen 530 of the first application, the electronic device may display the execution screen 542 of the second application in place of the execution screen of the first application, based on the attribute information of the execution screen of the first application.

According to an embodiment, the electronic device may display the execution screen 542 of the second application based on at least one of the layout information of the execution screen 530 of the first application or the background color information based on the light/dark mode.

According to an embodiment, the background color of the execution screen 542 of the second application may be the same as the background color (e.g., a color (e.g., white) corresponding to the light mode, or a color (e.g., black) corresponding to the dark mode) of the execution screen 530 of the first application.

Although FIG. 5C illustrates that the layouts of the execution screen 530 of the first application and the execution screen 530 of the second applications are maintained, the electronic device may display the execution screen 542 of the second application with a layout based on the setting of the second application, while maintaining only the background color of the execution screen 530 of the first application. Consequently, the layout of the execution screen 542 of the second application may be different from the layout of the execution screen 530 of the first application.

FIG. 5D is a diagram illustrating an operation of changing an application being executed while maintaining attribute information of an electronic device. For example, as illustrated in FIG. 4C, when the execution screen of the first application is in the second split view, FIG. 5D is a diagram illustrating displaying an execution screen of a second application. According to an example, the first application may be a camera application and the second application may be a photo album application, but the present disclosure is not limited thereto.

Referring to FIG. 5D, the electronic device (e.g., the electronic device 101 of FIG. 1 or the processor 120 of FIG. 1) may display an execution screen 550 of a first application.

According to an embodiment, the electronic device may display a preview screen of a camera application in a first area, which is a part of the entire area of the touch screen (e.g., display module 160 of FIG. 1), and may display at least one image stored in a memory (e.g., the memory 130 of FIG. 1) in a second area, which is the remaining area of the entire area. At least one image may be displayed in the second area in two or more columns (e.g., three columns).

According to an embodiment, in response to selection of a UI 551 (e.g., a quick-view button) for executing the second application included in the execution screen 550 of the first application, the electronic device may display the execution screen 560 of the second application in place of the execution screen of the first application, based on the attribute information of the execution screen of the first application.

According to an embodiment, the electronic device may display the execution screen 560 of the second application based on at least one of the layout information of the execution screen of the first application or the background color information based on the light/dark mode.

According to an embodiment, the execution screen 560 of the second application may display a recently captured image in the area corresponding to the preview area of the execution screen 550 of the first application. According to an example, the execution screen 560 of the second application may keep the display of at least one image in the area corresponding to the second area of the execution screen 550 of the first application. According to an example, when one of the at least one image included in the second area of the execution screen 560 of the second application is selected, the electronic device may display the selected image in the area corresponding to the preview area of the execution screen 550 of the first application.

According to an embodiment, the background color of the execution screen 560 of the second application may be the same as the background color (e.g., a color (e.g., white) corresponding to the light mode, or a color (e.g., black) corresponding to the dark mode) of the execution screen 550 of the first application.

Although FIG. 5D illustrates that the layout and background color of the execution screen 550 of the first application and the execution screen 560 of the second application are maintained, the electronic device may display the execution screen 560 of the second application with a layout based on the setting of the second application, while maintaining only the background color of the execution screen 550 of the first application. As a result, the layout of the execution screen 560 of the second application may be different from the layout of the execution screen 550 of the first application. According to an example, the electronic device may display the execution screen 560 of the second application with a background color based on the setting of the second application, while maintaining only the layout of the execution screen 550 of the first application. In this case, the background color of the execution screen 560 of the second application may be different from the background color of the execution screen 550 of the first application.

FIG. 6 is a diagram illustrating an operation of changing an application being executed while maintaining the attribute information of an electronic device. For example, FIG. 6 illustrates the operation of displaying the execution screen of a second application while maintaining the background color based on the light/dark mode of the execution screen of the first application.

Referring to FIG. 6, the electronic device (e.g., the electronic device 101 of FIG. 1 or the processor 120 of FIG. 1) may display an execution screen 610 of a first application. According to an embodiment, the first application may be a camera application.

According to an embodiment, the electronic device may display a plurality of UIs 611 for changing the attribute of the execution screen in a partial area of the execution screen 610 of the first application.

According to an embodiment, when a UI 61 for setting the light/dark mode among the plurality of UIs 611 is selected, the electronic device may change the background color of the execution screen 610 of the first application. For example, the electronic device may change the execution screen 610 of the first application whose background color corresponds to a color for the night mode (e.g., black), to the execution screen 620 of the first application whose background color corresponds to a color for the day mode (e.g., white).

According to an embodiment, in response to selection of a UI (e.g., a button or icon for executing the second application, or a quick-view button) for executing a second application included in the execution screen 620 of the first application, the electronic device may display the execution screen 630 of the second application in place of the execution screen of the first application, based on the attribute information of the execution screen of the first application. According to an embodiment, the background color of the execution screen 630 of the second application may correspond to a color for the day mode (e.g., white), and the layout of the execution screen 630 of the second application may be the same as that of the execution screen 620 of the first application.

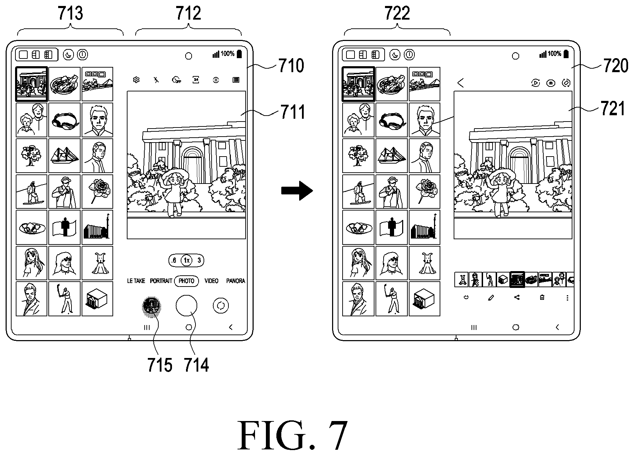

FIG. 7 is a diagram illustrating an operation of changing an application being executed while maintaining attribute information of an electronic device.

Referring to FIG. 7, the electronic device (e.g., the electronic device 101 of FIG. 1 or the processor 120 of FIG. 1) may display an execution screen 710 of a first application. According to an embodiment, the first application may be a camera application.

According to an embodiment, the execution screen 710 of the first application may include a preview area 711 in a first area 712, which is a partial area thereof, and may include at least one image stored in a memory (e.g., the memory 130 of FIG. 1) in two or more columns in a second area 713.

According to an embodiment, the execution screen 710 of the first application may be in day mode, and its background color may correspond to a color for the day mode (e.g., white).

According to an embodiment, the execution screen 710 of the first application may include a capture button 714 for capturing an image displayed in the preview area, and a UI 715 for executing a second application to identify the captured image, in the first area 712 thereof. According to an embodiment, the second application may be a photo album application for identifying images or an application for editing images.

According to an embodiment, upon selecting the UI 715 for executing the second application to identify the captured image, the electronic device may display the execution screen 720 of the second application based on the attribute information of the execution screen 710 of the first application.

According to an embodiment, upon selecting the UI 715 for executing the second application to identify the captured image, the electronic device may display the execution screen 720 of the second application based on the layout and/or background color of the execution screen 710 of the first application. For example, the electronic device may display the recently captured image 721 in an area that corresponds to the preview area 711 of the execution screen 710 of the first application among the execution screen 720 of the second application, and may maintain at least one stored image arranged in two or more columns in an area that corresponds to the second area 722 of the execution screen 710 of the first application.

According to an embodiment, the background color of the execution screen 720 of the second application may correspond to a color for the day mode (e.g., white), which is the same as the background color of the execution screen 710 of the first application.

FIG. 8 is a diagram illustrating an operation of changing an application being executed while maintaining the attribute information of an electronic device.

Referring to FIG. 8, the electronic device (e.g., the electronic device 101 of FIG. 1 or the processor 120 of FIG. 1) may display an execution screen 810 of a first application. According to an embodiment, the first application may be a camera application.

According to an embodiment, in FIG. 8, the layout of the execution screen 810 of the first application is shown to be a second split view in which a preview area is included in a first area and at least one image in two or more columns is included in a second area, but is not limited thereto.

According to an embodiment, the background color of the execution screen 810 of the first application may correspond to a color (e.g., black) for the night mode.

According to an embodiment, the execution screen 810 of the first application may include a UI 811 for executing the second application. According to an embodiment, the UI 811 for executing the second application may be a UI for executing a photo album application, such as a button or icon for executing a photo album application for identifying the captured image or a quick view button.

According to an embodiment, upon selecting the UI 811 for executing the second application, the electronic device may display the execution screen 820 of the second application based on the attribute information of the execution screen 810 of the first application. According to an embodiment, the execution screen 820 of the second application may be in the form of a second split view, similar to the layout of the execution screen 810 of the first application, and its background color may correspond to a color for the night mode.

According to an embodiment, when a UI 821 for setting (e.g., switching between) the light/dark mode is selected among a plurality of UIs displayed in a partial area of the execution screen 820 of the second application, the electronic device may display the execution screen 830 of the second application whose background color is changed to a color for the day mode (e.g., white).

According to an embodiment, upon receiving a user input 831 for returning to the first application while the execution screen 830 of the second application whose background color has been changed is displayed, the electronic device may display the execution screen 840 of the first application based on the attribute information of the execution screen 830 of the second application.

According to an embodiment, the user input 831 for returning to the first application may be selecting (e.g., touching) a back key for displaying a previous screen or performing a touch input for displaying a previous screen. For example, a touch input for displaying the previous screen may be a swipe gesture in one direction, but is not limited thereto and may include a touch input set to correspond to the function for displaying the previous screen.

According to an embodiment, the execution screen 840 of the first application displayed in response to the user input 831 for returning to the first application may be obtained based on the attribute information of the execution screen 830 of the second application at the time when the user input 831 for returning to the first application is entered.

According to an embodiment, the execution screen 840 of the first application displayed in response to the user input 831 for returning to the first application may be in the form of a second split view, similar to the layout of the execution screen 830 of the second application, and its background color may correspond to a color for the day mode.

As described above, even if the attributes are changed on the execution screen of an application, the execution screen of another application is displayed based on the changed attributes, thereby providing a consistent screen layout and detailed functions, and providing a user with a more convenient and useful photo and video viewing experience.

Furthermore, the execution screen of the second application can be displayed while maintaining the layout and background color of the execution screen of the first application, thereby reducing the resources required for rendering it.

FIG. 9A is a diagram illustrating an operation of changing attribute information of an execution screen of an application of an electronic device.

Referring to FIG. 9A, the electronic device (e.g., the electronic device 101 in FIG. 1 or the processor 120 in FIG. 1) may display an execution screen 910 of a first application. According to an embodiment, the first application may be a camera application.

According to an embodiment, the electronic device may display a plurality of UIs 911 for changing the attributes of the execution screen in a partial area of the execution screen 910 of the first application.

According to an embodiment, when a UI 91 for displaying detailed information is selected from among the plurality of UIs 911, the electronic device may change the layout of the execution screen of the first application to display a preview area in a partial area of the touch screen and display detailed information about the preview in the remaining partial area, as illustrated in FIG. 9B.

FIG. 9B is a diagram illustrating an execution screen 920 of an application of an electronic device that includes attribute information containing detailed information of a preview image.

Referring to FIG. 9B, the electronic device may display a preview area 921 in a first area 922, which is a partial area of the touch screen, and display detailed information 924 about the preview in a second area 923, which is the remaining area other than the first area in the entire area. According to an embodiment, the first area 922 may include a button 925 for capturing an image displayed in the preview area and a UI 926 for executing a second application, in addition to the preview area 92. According to an embodiment, the second application may be a photo album application for identifying captured images. According to an embodiment, the UI 926 for executing the second application may be a button or an icon for executing the second application to identify the captured image or a quick-view button.

According to an embodiment, the detailed information 924 may include at least one of camera lens information, shooting mode information, electronic device type information, capture date information, capture time information, capture location information, or person/object recognition information included in the captured image.

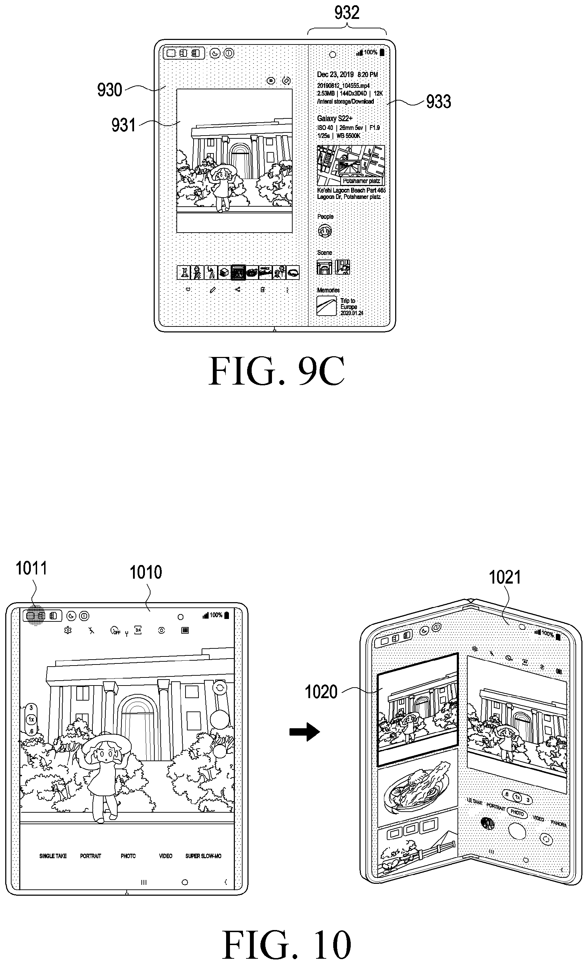

According to an embodiment, when the UI 926 for executing the second application is selected while the detailed information 924 is displayed on the execution screen 920 of the first application, the electronic device may display the execution screen of the second application based on the attribute information of the execution screen 920 of the first application, as illustrated in FIG. 9C.

FIG. 9C is a diagram illustrating an operation of changing an application being executed while maintaining the attribute information of an electronic device.

Referring to FIG. 9C, the electronic device may display an execution screen 930 of the second application based on the attribute information of the execution screen of the first application as illustrated in FIG. 9B. According to an embodiment, the electronic device may display the most recently captured image 931 in an area corresponding to the preview area 921 included in the execution screen of the first application, and may display the execution screen 930 of the second application including detailed information 933 related to the most recently captured image 931 in a second area 932 where the detailed information 924 of the execution screen of the first application is displayed.

According to an embodiment, the detailed information 933 displayed on the execution screen 930 of the second application may include camera lens information, shooting mode information, type information of the electronic device, capture date information, capture time information, and capture location information received from the first application.

According to an embodiment, the detailed information 933 displayed on the execution screen 930 of the second application may further include a result of analyzing the captured image through the analysis engine of the second application. According to an embodiment, the analysis result of the captured image may include at least one of a person included in the image, name tags of the person, objects, name tags of objects, and relevance with other images.

FIG. 9C illustrates that the most recently captured image 931 can be displayed in the area corresponding to the preview area of the execution screen of the first application, but when one of the multiple stored images displayed on the execution screen 930 of the second application is selected, the selected image may be displayed in the area corresponding to the preview area of the execution screen of the first application, and detailed information about the selected image may be displayed.

FIG. 10 is a diagram illustrating an operation of changing a layout based on a hinge area of a foldable electronic device. For example, in the foldable electronic device, its screens may be arranged left and right based on the hinge.

Referring to FIG. 10, the foldable electronic device (e.g., the electronic device 101 of FIG. 1 or the processor 120 of FIG. 1) may display an execution screen 1010 of a first application. According to an embodiment, the execution screen 1010 of the first application may include a plurality of UIs for changing the attributes of the execution screen. According to an embodiment, since the plurality of UIs are the same as those shown in FIG. 3A, repetitive descriptions will be omitted.

According to an embodiment, upon receiving an input for selecting a UI 1011 corresponding to a layout different from the layout of the displayed execution screen 1010 of the first application among the plurality of UIs, the electronic device may change the execution screen of the first application to the layout corresponding to the selected UI 1011.

According to an embodiment, when a UI corresponding to the split view is selected in the full-screen view state where the entire area of the touch screen (e.g., the display module 160 of FIG. 1) is the preview area, the foldable electronic device may display the preview area in a first area 1021 of the touch screen and display at least one image pre-stored in a memory (e.g., the memory 130 of FIG. 1) in a second area 1020. According to an embodiment, at least one pre-stored image is displayed in a single column in FIG. 10, but it may also be displayed in two or more columns.

According to an embodiment, the foldable electronic device may display the first area 1021 and the second area 1020 based on the hinge area. For example, the hinge area may be a region in which at least a portion thereof may be formed as a curved surface having a certain curvature.

For example, the foldable electronic device may display the first area 1021 and the second area 1020 on both sides of the hinge area so that images are not displayed in the area where the foldable electronic device is folded by the hinge. For example, the first area 1021 may be an area corresponding to the first housing among the entire area of the display, and the second area 1020 may be an area corresponding to the second housing among the entire area of the display.

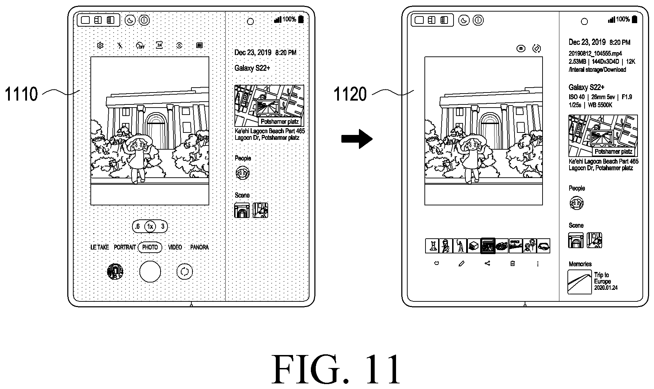

FIG. 11 is a diagram illustrating an operation of displaying an execution screen of an application switched based on a surrounding environment of an electronic device.

Referring to FIG. 11, the electronic device (e.g., the electronic device 101 of FIG. 1 or the processor 120 of FIG. 1) may display an execution screen 1110 of a first application. According to an embodiment, the execution screen 1110 of the first application may have a background color corresponding to a color for the night mode (e.g., black).

According to an embodiment, when a UI for executing a second application included in the execution screen 1110 of the first application is selected, the electronic device may display an execution screen 1120 of the second application based on the attribute information of the execution screen 1110 of the first application.

According to an embodiment, when the execution screen 1110 of the first application includes a layout with detailed information, the electronic device may display the execution screen 1120 of the second application in a layout with detailed information as well.

According to an embodiment, the electronic device may display the execution screen 1120 of the second application based on the background color information of the execution screen 1110 of the first application. However, if the ambient illuminance obtained by at least one sensor (e.g., the sensor module 176 of FIG. 1) does not correspond to the background color information, the electronic device may determine the background color of the execution screen 1120 of the second application based on the ambient illuminance.

For example, when the background color of the execution screen 1110 of the first application is a color (e.g., black) corresponding to the night mode, the electronic device should also determine the background color of the execution screen 1120 of the second application as a color corresponding to the night mode, but when the ambient illuminance is greater than or equal to the set value, the layout of the execution screen 1120 of the second application is the same as the execution screen 1110 of the first application, but the background color of the execution screen 1120 of the second application may be displayed as a color (e.g., white) corresponding to a day mode, which is different from the background color of the execution screen 1110 of the first application.

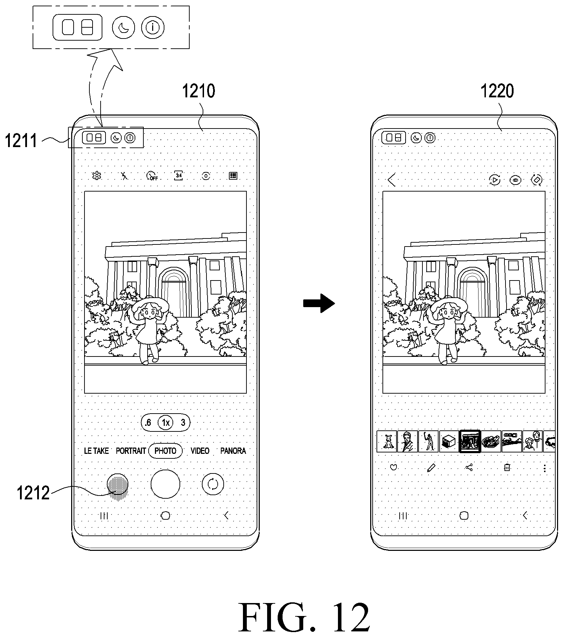

FIG. 12 illustrates an operation of changing an application being executed while maintaining attribute information of a foldable electronic device. For example, FIG. 12 illustrates an embodiment of a foldable device where screens are arranged up and down based on a hinge area.

Referring to FIG. 12, the foldable electronic device (e.g., the electronic device 101 or processor 120 of FIG. 1) may display an execution screen 1210 of a first application.

According to an embodiment, the execution screen 1210 of the first application may include a plurality of UIs 1211 to change attributes of the execution screen. For example, a plurality of UIs may include a UI corresponding to a full screen view, a UI corresponding to a split view divided up and down, a UI for setting a light/dark mode, and a UI for displaying detailed information.

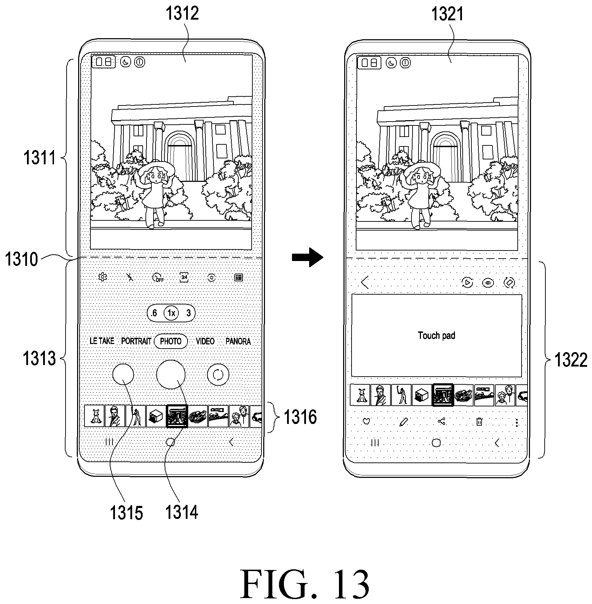

According to an embodiment, FIG. 12 illustrates a case where the layout of the execution screen 1210 of the first application is in full screen view, and a case where the layout is in split view will be described below with reference to FIG. 13. According to an embodiment, the full screen view may be displayed when the foldable electronic device is fully unfolded, and the preview area included in the full screen view may have the same ratio as that of the preview image obtained by the camera module (e.g., the camera module 180 of FIG. 1).

According to an embodiment, when a UI 1212 for executing a second application included in the execution screen 1210 of the first application is selected, the foldable electronic device may display an execution screen 1220 of the second application based on the attribute information of the execution screen 1210 of the first application.

According to an embodiment, the foldable electronic device may display the execution screen 1220 of the second application including the most recently captured image in an area corresponding to the preview area included in the execution screen 1210 of the first application, and including at least one image previously stored in another area.

According to an embodiment, the foldable electronic device may display the execution screen 1220 of the second application with the same background color as the background color of the execution screen 1210 of the first application.

FIG. 13 is a diagram illustrating an operation of changing a layout based on a hinge area of a foldable electronic device. For example, FIG. 13 illustrates an embodiment of a foldable device in which a screen is arranged vertically based on the hinge area.

Referring to FIG. 13, the foldable electronic device (e.g., the electronic device 101 of FIG. 1 or the processor 120 of FIG. 1) may display an execution screen of a first application.

According to an embodiment, the execution screen of the first application may be divided vertically based on a hinge area 1310. According to an embodiment, the execution screen of the first application may include a preview area 1312 in the first area 1311 above the hinge area (1310), and may include UIs for controlling the first application in the second area 1313 below the hinge area 1310.

According to an embodiment, the UIs for controlling the first application may include a UI 1314 for image capture, a UI 1315 for executing the second application, and at least one image 1316 previously stored in a memory (e.g., the memory 130 of FIG. 1).

FIG. 13 illustrates a case where the layout of the execution screen of the first application is in split view. According to an embodiment, the split view may be displayed when the foldable electronic device is not fully unfolded (e.g., in flex mode) or when a UI corresponding to the split view is selected even when the foldable electronic device is fully unfolded.

According to an embodiment, when the UI 1315 for executing the second application included in the execution screen of the first application is selected, the foldable electronic device may display the execution screen 1220 of the second application based on the attribute information of the execution screen 1210 of the first application.

According to an embodiment, the foldable electronic device may display the execution screen of the second application, which includes the most recently captured image 1321 in the area corresponding to the preview area 1312 included in the execution screen of the first application, and includes a UI 1322 for editing the most recently captured image 1321 in the area where the UIs for controlling the first application are displayed.

According to an embodiment, the foldable electronic device may display an execution screen of the second application having the same background color as that of the execution screen of the first application.

According to an example, the electronic device, as illustrated in Fig. 4a to Fig. 13, may be a foldable device, but the present disclosure is not limited thereto. The electronic device also may be a bar type device or a rollable type device.

According to an embodiment, an electronic device (e.g., the electronic device 101 of FIG. 1) may include a touch screen (e.g., the display module 160 of FIG. 1) and at least one processor (e.g., the processor 120 of FIG. 1).

According to an embodiment, the at least one processor may display an execution screen of a first application (e.g., the execution screen 410 of the first application in FIG. 4A, the execution screen 420 of the first application in FIG. 4B, the execution screen 430 of the first application in FIG. 4C, the execution screen 510 of the first application in FIG. 5A, the execution screen 530 of the first application in FIG. 5B, the execution screen 550 of the first application in FIG. 5C or FIG. 5D, the execution screen 610 or 620 of the first application in FIG. 6, the execution screen 710 of the first application in FIG. 7, the execution screen 810 of the first application in FIG. 8, the execution screen 910 of the first application in FIG. 9A, the execution screen 1010 of the first application in FIG. 10, the execution screen 1110 of the first application in FIG. 11, or the execution screen 1210 of the first application in FIG. 12).

According to an embodiment, the at least one processor may obtain attribute information of the execution screen of the first application including at least one of layout information of the execution screen of the first application or color information based on the light/dark mode.

According to an embodiment, the at least one processor may display an execution screen of a second application (e.g., the execution screen 520 of the second application in FIG. 5A, the execution screen 540 of the second application in FIG. 5B, the execution screen 541 of the second application in FIG. 5C, the execution screen 560 of the second application in FIG. 5D, the execution screen 630 of the second application in FIG. 6, the execution screen 720 of the second application in FIG. 7, the execution screen 820 of the first application in FIG. 8, the execution screen 1120 of the second application in FIG. 11, or the execution screen 1220 of the second application in FIG. 12) in place of the execution screen of the first application, based on at least one of the attribute information of the execution screen of the first application, in response to the selection of a user interface (UI) for executing the second application included in the execution screen of the first application.

According to an embodiment, the first application may be a camera application.

According to an embodiment, the layout information may include arrangement information for at least one of a first area displaying a preview, a second area displaying at least one stored image, or a third area displaying detailed information corresponding to the preview.

According to an embodiment, the at least one processor may display an execution screen of the second application including the same attribute information as that of the execution screen of the first application.

According to an embodiment, the second application may be an application for identifying or editing images obtained through the camera application.

According to an embodiment, the at least one processor may obtain an image captured of a preview displayed in the first area and information associated with the image based on reception of an input to capture the preview displayed in the first area while the execution screen of the first application is displayed.

According to an embodiment, the at least one processor may obtain the execution screen of the second application by using the image and the information associated the image, in response to the selection of the UI for executing the second application included in the execution screen of the first application.

According to an embodiment, the at least one processor may obtain position and/or size information of at least one of the first area, second area, and third area included in the execution screen of the first application.

According to an embodiment, the at least one processor may obtain the execution screen of the second application by using the position and/or size information of at least one of the first area, second area, and third area, in response to the selection of the UI for executing the second application included in the execution screen of the first application.

According to an embodiment, the electronic device may be a foldable electronic device comprising a hinge.

According to an embodiment, the layout information may include arrangement information for at least one of the first to third areas based on the area where the hinge is disposed.

According to an embodiment, the at least one processor may display a plurality of UIs for changing attribute information of the execution screen of the first application in a partial area of the execution screen of the first application.

According to an embodiment, the at least one processor may change the execution screen of the first application based on attribute information corresponding to a selected UI among the plurality of UIs.

According to an embodiment, the at least one processor can obtain the execution screen of the second application by using the attribute information of the changed execution screen of the first application, in response to the selection of the UI for executing the second application included in the changed execution screen of the first application.

According to an embodiment, the at least one processor may change the execution screen of the first application based on attribute information corresponding to a touch input received through the touch screen.

According to an embodiment, the at least one processor may obtain the execution screen of the second application by using the attribute information of the changed execution screen of the first application, in response to the selection of the UI for executing the second application included in the changed execution screen of the first application.

According to an embodiment, the electronic device may further include at least one sensor.

According to an embodiment, the at least one processor may obtain the illuminance of a surrounding environment through at least one sensor.

According to an embodiment, the at least one processor may obtain the execution screen of the second application having a background color obtained based on the illuminance of the surrounding environment, in response to the selection of the UI for executing the second application included in the execution screen of the first application.

According to an embodiment, in response to receiving a user input for returning to the first application while the execution screen of the second application is displayed, the at least one processor may display the execution screen of the first application in place of the execution screen of the second application, based on the attribute information of the execution screen of the second application.

According to an embodiment, a method of controlling an electronic device may include displaying the execution screen of the first application.

According to an embodiment, the method for controlling the electronic device may include obtaining attribute information of the execution screen of the first application including at least one of the layout information of the execution screen of the first application or color information based on the light/dark mode.

According to an embodiment, the method for controlling the electronic device may include displaying the execution screen of the second application in place of the execution screen of the first application, based on at least one of the attribute information of the execution screen of the first application, in response to the selection of the UI for executing the second application included in the execution screen of the first application.

According to an embodiment, the first application may be a camera application.

According to an embodiment, the layout information may include arrangement information for at least one of a first area for displaying a preview, a second area for displaying at least one stored image, or a third area for displaying detailed information corresponding to the preview.

According to an embodiment, displaying the execution screen of the second application may include displaying the execution screen of the second application having the same attribute information as that of the execution screen of the first application.

According to an embodiment, the second application may be an application for identifying or editing images obtained based on a camera application.

According to an embodiment, the method of controlling the electronic device may further include obtaining an image captured of the preview displayed in the first area and information associated with the image, based on reception of an input for capturing the preview displayed in the first area while the execution screen of the first application is displayed.

According to an embodiment, displaying the execution screen of the second application may include obtaining the execution screen of the second application by using the image and the information associated with the image, in response to the selection of the UI for executing the second application included in the execution screen of the first application.

According to an embodiment, obtaining the attribute information of the execution screen of the first application may include obtaining position and/or size information of at least one of the first to third areas included in the execution screen of the first application.

According to an embodiment, displaying the execution screen of the second application may include obtaining the execution screen of the second application by using the position and/or size information of at least one of the first to third areas, in response to the selection of the UI for executing the second application included in the execution screen of the first application.

According to an embodiment, the electronic device may be a foldable electronic device comprising a hinge.

According to an embodiment, the layout information may include arrangement information for at least one of the first to third areas based on the area where the hinge is disposed.

According to an embodiment, the method for controlling the electronic device may further include displaying a plurality of UIs for changing attribute information of the execution screen of the first application in a partial area of the execution screen of the first application.

According to an embodiment, the method for controlling the electronic device may further include changing the execution screen of the first application based on the attribute information corresponding to a selected UI among the plurality of UIs.

According to an embodiment, displaying the execution screen of the second application may include obtaining the execution screen of the second application by using the attribute information of the changed execution screen of the first application, in response to the selection of the UI for executing the second application included in the changed execution screen of the first application.

According to an embodiment, the method for controlling the electronic device may further include changing the execution screen of the first application based on attribute information corresponding to a touch input received through the touch screen.

According to an embodiment, displaying the execution screen of the second application may include obtaining the execution screen of the second application by using the attribute information of the changed execution screen of the first application, in response to the selection of the UI for executing the second application included in the changed execution screen of the first application.

According to an embodiment, the method for controlling the electronic device may further include obtaining illuminance of a surrounding environment through at least one sensor.

According to an embodiment, displaying the execution screen of the second application may include obtaining the execution screen of the second application having a background color obtained based on the illuminance of the surrounding environment, in response to the selection of the UI for executing the second application included in the execution screen of the first application.

According to an embodiment, the method for controlling the electronic device may further include displaying the execution screen of the first application in place of the execution screen of the second application, based on the attribute information of the execution screen of the second application, in response to receiving a user input for returning to the first application while the execution screen of the second application is displayed.

According to an embodiment, a non-transitory computer-readable recording medium storing one or more programs, the one or more programs may include instructions that enable an electronic device to display an execution screen of a first application.

According to an embodiment, the one or more programs may include instructions that enable the electronic device to identify attribute information of the execution screen of the first application, the attribute information including at least one of layout information of the execution screen of the first application or background color information of the execution screen of the first application.

According to an embodiment, the one or more programs may include instructions that enable the electronic device to, in response to a selection of a user interface (UI) for executing a second application, the UI being included in the execution screen of the first application, display an execution screen (520, 540, 541, 560, 630, 720, 820, 1120, or 1220) of the second application to which at least part of the identified attribute information of the execution screen of the first application is applied.

According to an embodiment, wherein the first application may be a camera application.

According to an embodiment, wherein the layout information may include arrangement information for at least one of a first area for displaying a preview, a second area for displaying at least one stored image, or a third area for displaying detailed information corresponding to the preview.

According to an embodiment, the one or more programs may include instructions that enable the electronic device to display the execution screen of the second application with the same attribute information as the attribute information of the execution screen of the first application.

According to an embodiment, wherein the second application is an application for viewing or editing images obtained based on the camera application.

According to an embodiment, the one or more programs may include instructions that enable the electronic device to obtain an image captured of the preview displayed in the first area and information associated with the image, based on reception of an input for capturing the preview displayed in the first area while the execution screen of the first application is displayed.

According to an embodiment, the one or more programs may include instructions that enable the electronic device to obtain the execution screen of the second application using the image and the information associated with the image, in response to the selection of the UI for executing the second application included in the execution screen of the first application.

According to an embodiment, the one or more programs may include instructions that enable the electronic device to obtain position and/or size information of at least one of the first to third areas included in the execution screen of the first application.

According to an embodiment, the one or more programs may include instructions that enable the electronic device to obtain the execution screen of the second application using the position and/or size information of at least one of the first to third areas, in response to the selection of the UI for executing the second application included in the execution screen of the first application.

According to an embodiment, wherein the electronic device is a foldable electronic device including a hinge.

According to an embodiment, wherein the layout information includes arrangement information for at least one of the first to third areas based on an area where the hinge is disposed.

According to an embodiment, the one or more programs may include instructions that enable the electronic device to display a plurality of UIs for changing the attribute information of the execution screen of the first application, in a partial area of the execution screen of the first application.

According to an embodiment, the one or more programs may include instructions that enable the electronic device to change the execution screen of the first application based on attribute information corresponding to a selected UI among the plurality of UIs.

According to an embodiment, the one or more programs may include instructions that enable the electronic device to obtain the execution screen of the second application using the attribute information of the changed execution screen of the first application, in response to the selection of the UI for executing the second application included in the changed execution screen of the first application.

According to an embodiment, the one or more programs may include instructions that enable the electronic device to change the execution screen of the first application based on attribute information corresponding to a touch input received through the touch screen.

According to an embodiment, the one or more programs may include instructions that enable the electronic device to obtain the execution screen of the second application using the attribute information of the changed execution screen of the first application, in response to the selection of the UI for executing the second application included in the changed execution screen of the first application.

According to an embodiment, the one or more programs may include instructions that enable the electronic device to obtain illuminance of a surrounding environment through the at least one sensor.

According to an embodiment, the one or more programs may include instructions that enable the electronic device to obtain the execution screen of the second application based on the layout information and a background color obtained based on the illuminance of the surrounding environment, in response to the selection of the UI for executing the second application included in the execution screen of the first application.

According to an embodiment, the one or more programs may include instructions that enable the electronic device to, in response to receiving a user input for returning to the first application while the execution screen of the second application is displayed, display the execution screen of the first application, based on the attribute information of the execution screen of the second application.

According to an embodiment, the one or more programs may include instructions that enable the electronic device to, as at least part of displaying of the execution screen of the second application comprises replacing, based on the at least part of the obtained attribute information, the execution screen of the first application by the execution screen of the second application.

According to an embodiment, wherein the attribute information of the execution screen of the second application displayed based on the selection of the UI is different from attribute information of an execution screen of the second application executed through an icon for execution of the second application included in a home screen, a lock screen, or an application icon tray.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a touch screen display (160);
a processor (120); and
memory (130) storing instructions that when executed by the processor, cause the electronic device to:
display, on the touch screen display, an execution screen (410, 420, 430, 510, 530, 550, 610, 620, 710, 810, 910, 1010, 1110, or 1210) of a first application;
identify attribute information of the execution screen of the first application, the attribute information including at least one layout information of the execution screen of the first application or background color information of the execution screen of the first application; and
in response to receiving, via the touch screen display, a selection of a user interface (UI) item for executing a second application, the UI item being displayed in the execution screen of the first application, display, on the touch screen display, an execution screen (520, 540, 541, 560, 630, 720, 820, 1120, or 1220) of the second application to which at least part of the identified attribute information of the execution screen of the first application is applied.

2. The electronic device of claim 1, wherein:
the first application is a camera application, and
the layout information includes arrangement information for at least one of a first area for displaying a preview, a second area for displaying at least one stored image, or a third area for displaying detailed information corresponding to the preview.

3. The electronic device of claim 2,
wherein the memory stores instructions that, when executed by the at least one processor, cause the electronic device to display the execution screen of the second application with the same attribute information as the attribute information of the execution screen of the first application, and
wherein the second application is an application for viewing or editing images obtained based on the camera application.

4. The electronic device of claim 2 or 3, wherein the memory stores instructions that, when executed by the processor, cause the electronic device to:
obtain an image captured of the preview displayed in the first area and information associated with the image, based on reception of an input for capturing the preview displayed in the first area while the execution screen of the first application is displayed; and
obtain the execution screen of the second application using the image and the information associated with the image, in response to receiving the selection of the UI item for executing the second application displayed in the execution screen of the first application.

5. The electronic device of any one of claims 2 to 4, wherein the memory stores instructions that, when executed by the processor, cause the electronic device to:
obtain position and/or size information of at least one of the first to third areas included in the execution screen of the first application; and
obtain the execution screen of the second application using the position and/or size information of at least one of the first to third areas, in response to receiving the selection of the UI item for executing the second application displayed in the execution screen of the first application.

6. The electronic device of any one of claims 2 to 5, wherein:
the electronic device is a foldable electronic device including a hinge, and
the layout information includes arrangement information for at least one of the first to third areas based on an area where the hinge is disposed.

7. The electronic device of any one of claims 1 to 6, wherein the memory stores instructions that, when executed by the processor, cause the electronic device to:
display a plurality of UI items for changing the attribute information of the execution screen of the first application, in a partial area of the execution screen of the first application;
change the execution screen of the first application based on attribute information corresponding to a selected UI item among the plurality of UI items; and
obtain the execution screen of the second application using the attribute information of the changed execution screen of the first application, in response to receiving the selection of the UI item for executing the second application displayed in the changed execution screen of the first application.

8. The electronic device of any one of claims 1 to 6, wherein the memory stores instructions that, when executed by the processor, cause the electronic device to:
change the execution screen of the first application based on attribute information corresponding to a touch input received through the touch screen; and
obtain the execution screen of the second application using the attribute information of the changed execution screen of the first application, in response to receiving the selection of the UI item for executing the second application displayed in the changed execution screen of the first application.

9. The electronic device of any one of claims 1 to 8, further comprising at least one sensor,
wherein the memory stores instructions that, when executed by the processor, cause the electronic device to:
obtain illuminance of a surrounding environment through the at least one sensor, and
obtain the execution screen of the second application based on the layout information and a background color obtained based on the illuminance of the surrounding environment, in response to receiving the selection of the UI item for executing the second application displayed in the execution screen of the first application.

10. The electronic device of any one of claims 1 to 9, wherein the memory stores instructions that, when executed by the processor, cause the electronic device to, in response to receiving a user input for returning to the first application while the execution screen of the second application is displayed, display the execution screen of the first application, based on the attribute information of the execution screen of the second application.

11. The electronic device of any one of claims 1 to 10, wherein the memory stores instructions that, when executed by the processor, cause the electronic device to, as at least part of displaying of the execution screen of the second application comprises replacing, based on the at least part of the identified attribute information, the execution screen of the first application by the execution screen of the second application.

12. The electronic device of any one of claims 1 to 11, wherein the attribute information of the execution screen of the second application displayed based on the selection of the UI item is different from attribute information of an execution screen of the second application executed through an icon for execution of the second application included in a home screen, a lock screen, or an application icon tray.

13. The electronic device of any one of claims 1 to 12, wherein the memory stores instructions that, when executed by the processor, cause the electronic device to:
in response to receiving the selection of the UI item for executing the second application displayed in the changed execution screen of the first application, identify a preset attribute information of an execution screen of the second application,
based on the preset attribute information being different with at least part of the identified attribute information, display the execution screen of the second application to which at least part of the identified attribute information of the execution screen of the first application is applied

14. A method for controlling an electronic device, the method comprising:
displaying an execution screen of a first application;
identifying attribute information of the execution screen of the first application, the attribute information including at least one layout information of the execution screen of the first application or background color information of the execution screen of the first application; and
in response to receiving a selection of a user interface (UI) item for executing a second application, the UI item being displayed in the execution screen of the first application, displaying an execution screen of the second application to which at least part of the identified attribute information of the execution screen of the first application is applied.

15. A non-transitory computer-readable recording medium storing one or more programs, the one or more programs comprising instructions that, when executed by one or more processor of an electronic device, cause the electronic device to:
display an execution screen of a first application;
identify attribute information of the execution screen of the first application, the attribute information including at least one layout information of the execution screen of the first application or background color information of the execution screen of the first application; and
in response to receiving a selection of a user interface (UI) item for executing a second application, the UI item being displayed in the execution screen of the first application, display an execution screen of the second application to which at least part of the identified attribute information of the execution screen of the first application is applied.
